**Europäisches Patentamt**

**European Patent Office**

**Office européen des brevets**

(19)

(11) **EP 0 660 269 B1**

(12) **EUROPÄISCHE PATENTSCHRIFT**

(45) Veröffentlichungstag und Bekanntmachung des Hinweises auf die Patenterteilung:
**25.10.2000 Patentblatt 2000/43**

(51) Int. Cl.$^{7}$: **G07B 17/04**

(21) Anmeldenummer: **94250223.8**

(22) Anmeldetag: **09.09.1994**

(54) **Verfahren zur Verbesserung der Sicherheit von Frankiermaschinen**

Method for enhancing franking machines security

Procédé pour améliorer la sécurité de machines à affrauchir

(84) Benannte Vertragsstaaten:
**CH DE FR GB IT LI**

(30) Priorität: **21.12.1993 DE 4344476**

(43) Veröffentlichungstag der Anmeldung:
**28.06.1995 Patentblatt 1995/26**

(60) Teilanmeldung:
**99250341.7 / 0 969 423**
**99250340.9 / 0 969 422**
**99250339.1 / 0 969 421**

(73) Patentinhaber:
**Francotyp-Postalia Aktiengesellschaft & Co.**
**16547 Birkenwerder (DE)**

(72) Erfinder:
• **Wagner, Andreas**
  **D-10999 Berlin (DE)**
• **Windel, Harald**
  **D-14197 Berlin (DE)**
• **Reisinger, Frank**
  **D-13347 Berlin (DE)**
• **Freytag, Claus**
  **D-10587 Berlin (DE)**
• **Bischoff, Enno**
  **D-10589 Berlin (DE)**
• **Kubatzki, Ralf**
  **D-13086 Berlin (DE)**
• **Rieckhoff, Peter, Dr.**
  **D-10555 Berlin (DE)**
• **Hansel, Marcus**
  **D-10963 Berlin (DE)**
• **Günther, Stephan**
  **D-13465 Berlin (DE)**

(56) Entgegenhaltungen:
| | |
|---|---|
| EP-A- 0 194 660 | GB-A- 2 233 937 |
| US-A- 4 347 506 | US-A- 4 549 281 |
| US-A- 4 812 965 | |

**Beschreibung**

Die Erfindung betrifft ein Verfahren zur Verbesserung der Sicherheit von Frankiermaschinen, in der im Oberbegriff des Anspruchs 1 angegebenen Art.

Eine Frankiermaschine erzeugt in der Regel einen Aufdruck in einer mit der Post vereinbarten Form rechtsbündig, parallel zur oberen Kante des Postgutes beginnend mit dem Inhalt Postwert im Poststempel, Datum im Tagesstempel und Stempelabdrucke für Werbeklischee und ggf. Sendungsart im Wahldruckstempel. Der Postwert, das Datum und die Sendungsart bilden hierbei die entsprechend dem Poststück einzugebenden variablen Informationen.

Beim Postwert handelt es sich meist um die vom Absender vorausbezahlte Beförderungsgebühr (Franko), die einen wiederauffüllbaren Guthabenregister entnommen und zum Freimachen der Postsendung verwendet wird. Im Gegensatz dazu wird beim Kontokorrentverfahren ein Register in Abhängigkeit von den mit dem Postwert vorgenommenen Frankierungen lediglich hochgezählt und in regelmäßigen Abständen, von einem Postinspektor abgelesen. Grundsätzlich ist jede vorgenommene Frankierung abzurechnen und jede Manipulation, welche zu einer nichtabgerechneten Frankierung führt, muß verhindert werden.

Eine bekannte Frankiermaschine ist mit mindestens einem Eingabemittel, einem Ausgabemittel, einem Ein/Ausgabe-Steuermodul, einer Programm-, Daten- und insbesondere die Abrechnungsregister tragenden Speichereinrichtung, einer Steuereinrichtung und einem Druckermodul ausgerüstet. Bei einem Druckermodul mit Druckmechanik müssen auch Maßnahmen ergriffen werden, damit im ausgeschalteten Zustand die Druckmechanik nicht für unabgerechnete Abdrucke mißbraucht werden kann.

Die Erfindung betrifft ein Verfahren für Frankiermaschinen, die einen vollelektronischen erzeugten Abdruck zum Frankieren von Postgut einschließlich Abdruck eines Werbeklischees liefern. Das hat zur Folge, daß nur noch im eingeschalteten Zustand ein nicht abgerechnetes gültiges Frankieren verhindert werden muß.

Bei einer aus der US 4 746 234 bekannten Frankiermaschine werden feste und variable Informationen in Speichermitteln (ROM, RAM) gespeichert, um diese dann, wenn ein Brief auf dem Transportpfad vor der Druckposition einen Mikroschalter betätigt, mittels eines Mikroprozessors auszulesen und um ein Drucksteuersignal zu bilden. Beide sind elektronisch zu einem Druckbild zusammengesetzt und werden durch Thermotransferdruckmittel auf einen zu frankierenden Briefumschlag ausgedruckt.

Es wurde auch bereits ein Verfahren zum Steuern des spaltenweisen Druckens eines Postwertzeichenbildes in einer Frankiermaschine vorgeschlagen EP 578 042 A2, welches getrennt voneinander in graphische Pixelbilddaten umgesetzte feste und variable Daten während des spaltenweisen Druckens zusammensetzt. Es wäre daher schwierig, ohne großen und teuren Aufwand eine Manipulation am Drucksteuersignal vorzunehmen, wenn das Drucken mit einer hohen Geschwindigkeit erfolgt.

Andererseits umfaßt die Speichereinrichtung mindestens einen nichtflüchtigen Speicherbaustein, der das aktuell verbliebene Restguthaben enthält, welches daraus resultiert, daß von einem früher in die Frankiermaschine geladenen Guthaben der jeweilige zu druckenden Portowert abgezogen wird. Die Frankiermaschine blockiert, wenn das Restguthaben Null ist.

Bekannte Frankiermaschinen enthalten in mindestens einem Speicher drei relevante Postregister für verbrauchten Summenwert (steigendes Register), noch verfügbares Restguthaben (fallendes Register) und Register für eine Kontrollsumme. Die Kontrollsumme wird mit der Summe aus verbrauchten Summenwert und aus verfügbaren Guthaben verglichen. Bereits damit ist eine Überprüfung auf richtige Abrechnung möglich.

In der US 4 251 874 wird ein mechanisches Druckwerk, das zum Drucken voreingestellt werden muß, mit einer Detektoreinrichtung verwendet, um die Voreinstellung zu überwachen. Ferner sind im elektronischen Abrechnungssystem Mittel zum Feststellen von Fehlern in Daten- und Steuersignalen vorgesehen. Erreicht diese Fehlerzahl einen vorgegebenen Wert, wird der weitere Betrieb der Frankiermaschine unterbrochen. Der plötzliche Ausfall der Frankiermaschine ist aber für den Frankiermaschinenbenutzer nachteilig. Bei einem nichtmechanischen Druckprinzip sind andererseits kaum solche internen Fehler zu erwarten und bei einem schweren Fehler ist die Frankiermaschine ohnehin sowieso sofort abzuschalten. Außerdem wird die Sicherheit gegenüber einer Manipulation der Frankiermaschine dadurch kaum größer, indem die Frankiermaschine nach einer vorbestimmten Fehleranzahl abgeschaltet wird.

Aus der US 4 785 417 ist eine Frankiermaschine mit einer Programmsequenzüberwachung bekannt. Der korrekte Ablauf eines größeren Programmstücks wird mittels eines jedem Programmteil zugeordneten speziellen Codes kontrolliert, der bei Aufruf des Programmstücks in einer bestimmten Speicherzelle im RAM abgelegt wird. Es wird nun überprüft, ob der in der vorgenannten Speicherzelle abgelegte Code im gerade ablaufenden Programmteil immer noch vorhanden ist. Würde bei einer Manipulation der Lauf eines Programmteils unterbrochen und ein anderer Programmteil läuft ab, kann durch eine solche Kontrollfrage ein Fehler festgestellt werden. Der Vergleich kann aber nur im Hauptablauf durchgeführt werden. Nebenabläufe, beispielsweise sicherheitsrelevante Berechnungen, welche von mehreren Hauptabläufen benutzt werden, können durch eine solche Überwachung auf Ausführung des Programmteils jedoch nicht kontrolliert werden, weil die Programmkontrolle unabhängig vom Programmablauf erfolgt. Wird auf der Basis von erlaubten Programmteilen und Nebenabläufen so manipuliert, daß Nebenabläufe zusätzlich in Hauptabläufe eingebunden oder aus lezteren weggelassen werden oder auf Nebenabläufe verzweigt wird, dann würde kein Fehler festgestellt werden, da weder die Länge des Programmteils festgestellt, noch festgestellt werden kann, welcher Programmzweig wie oft durchlaufen wurde.

Bei bekannten Frankiermaschinen sind bereits weitere Sicherheitsmaßnahmen, wie Wegbrechschrauben und gekapselte abgeschirmte Sicherheitsgehäuse, zum Schutz vor der unbefugten Öffnung des Sicherheitsgehäuses üblich.

Ein Sicherheitsgehäuse für Frankiermaschinen, welches innere Sensoren aufweist, ist aus der DE 41 29 302 A1 bekannt. Die Sensoren sind hierbei mit einer Batterie verbundene Schalter, welche beim Öffnen des Sicherheitsgehäuses aktiv werden, um einen das Restwertguthaben speichernden Speicher (fallendes Postregister) durch Unterbrechen der Energiezufuhr zu löschen. Es ist bekanntlich aber nicht vorhersagbar, welchen Zustand ein spannungsloser Speicherbaustein beim Wiederkehr der Spannung einnimmt. Somit könnte auch ein nicht bezahltes höheres Restguthaben entstehen. Andererseits kann nicht ausgeschlossen werden, daß sich auf oben genannte Weise, das Restwertguthaben zumindest teilweise entlädt. Das wäre aber bei einer Inspektion nachteilig, da das Restwertguthaben, welches vom Frankiermaschinennutzer bezahlt worden war, auch wieder geladen werden muß, die Höhe dieses Restguthabens jedoch durch o.g. Einflüsse verfälscht sein kann. Schließlich ist der Beschreibung nicht entnehmbar, wie verhindert werden kann, daß ein Manipulator ein nicht bezahltes Restguthaben wiederherstellt.

Es ist bereits in der US 4 812 965 ein Ferninspektionssystem für Frankiermaschinen vorgeschlagen worden, welches auf speziellen Mitteilungen im Abdruck von Poststücken, die der Zentrale zugesandt werden müssen, oder auf einer Fernabfrage über MODEM basiert. Sensoren innerhalb der Frankiermaschine sollen jede vorgenommene Verfälschungshandlung detektieren, damit in zugehörigen Speichern ein Flag gesetzt werden kann, falls in die Frankiermaschine zu Manipulationszwecken eingegriffen wurde. Ein solcher Eingriff könnte erfolgen, um ein nicht bezahltes Guthaben in die Register zu laden.

Bei Feststellung einer Manipulation wird die Frankiermaschine während der Ferninspektion über Modem durch ein von der Datenzentrale ausgehendes Signal gesperrt.

Eine geschickte Manipulation könnte aber andererseits darin bestehen, nach der Herstellung von nicht abgerechneten Frankieraufdrucken, das Flag und die Register in den ursprünglichen Zustand zurückzuversetzen. Eine solche Manipulation wäre über Ferninspektion durch die Datenzentrale nicht erkennbar, wenn diese rückgängig gemachte Manipulation vor der Ferninspektion lag. Auch der Empfang der Postkarte von der Datenzentrale, auf welche eine zu Inspektionszwecken vorzunehmende Frankierung erfolgen soll, gestattet dem Manipulator die Frankiermaschine in ausreichender Zeit in den ursprünglichen Zustand zurückzuversetzen. Damit ist also noch keine höhere Sicherheit erreichbar.

Der Nachteil eines solchen Systems besteht darin, daß nicht verhindert werden kann, daß ein genügend qualifizierter Manipulator, welcher in die Frankiermaschine einbricht, seine hinterlassenen Spuren nachträglich beseitigt, indem die Flags gelöscht werden. Bei einer späteren Ferninspektion kann dann kein Fehler bzw. Manipulationsversuch festgestellt werden.

Weiterhin ist es in Verbindung mit der Fernabfrage von Registerständen bekannt, von einer Datenzentrale über eine Fernwertvorgabe eine Wiederaufladeinformation zur Frankiermaschine zu übertragen, um in das Register für das Restguthaben (Restwert) ein Guthaben nachzuladen. Es versteht sich von selbst, daß hierfür geeignete Sicherheitsmaßnahmen getroffen werden müssen, damit das in der Frankiermaschine gespeicherte Guthaben nicht in unbefugter Art und Weise aufgestockt werden kann. Die vorgenannten Lösungen gegen Mißbrauch und Fälschungsversuche zu schützen, erfordert einen zusätzlichen materiellen und zeitlichen Aufwand.

Üblich sind auch Schlüssel und ein Zahlenschloß um den Zugriff auf die Frankiermaschine zu erschweren.

Eine entsprechende Sicherheitsmaßnahme ist auch aus dem US 4 549 281 bekannt. Hier erfolgt ein Vergleich einer internen in einem nichtflüchtigen Register gespeicherten festen Kombination mit einer eingegebenen externen Kombination, wobei nach einer Anzahl an Fehlversuchen, d.h. Nichtidentität der Kombinationen, die Frankiermaschine mittels einer Hemmungselektronik gesperrt wird.

Nach US 4 835 697 kann zur Verhinderung eines unautorisierten Zugriffs auf die Frankiermaschine eine Kombination grundsätzlich gewechselt werden.

In der US 4 812 994 soll ein unautorisierter Zugriff einer Benutzung der Frankiermaschine darüber hinaus durch Sperrung der Frankiermaschine bei Falscheingabe eines vorbestimmten Paßwortes verhindert werden. Außerdem kann die Frankiermaschine mittels Paßwort und entsprechender Eingabe über Tastatur so eingestellt werden, daß ein Frankieren nur während eines vorbestimmten Zeitintervalls bzw. Tageszeiten möglich ist.

Das Paßwort kann durch einen Personalcomputer über MODEM, durch eine Chipkarte oder manuell in die Frankiermaschine eingegeben werden. Nach positivem Vergleich mit einem in der Frankiermaschine gespeicherten Paßwort wird die Frankiermaschine freigegeben. Im Steuermodul der Abrechnungseinheit ist ein Sicherheitsmodul (EPROM) integriert. Als weitere Sicherheitsmaßnahme ist ein Verschlüsselungsmodul (separater Mikroprozessor oder Programm für FM-CPU basierend auf DES-oder RSA-Code) vorgesehen, der eine den Portowert, die Teilnehmernummer, eine Transaktionsnummer und ähnliches umfassende Erkennungsnummer im Frankierstempel erzeugt. Bei genügend krimineller Energie könnte aber auch ein Paßwort ausgeforscht und samt Frankiermaschine in den Besitz eines Manipulators gebracht werden.

Aus der US 4 864 506 ist bekannt, daß wenn der Wert des Guthabens im fallenden Register unter einem Schwellwert liegt und eine vorbestimmte Zeit erreicht ist, eine Kommunikation zur entfernten Datenzentrale von der Frankiermaschine aufgenommen wird. Es ist vorgesehen, daß die Datenzentrale zum Empfang von Registerdaten und zur Kontrolle, ob die Frankiermaschine noch an eine bestimmte Telefonnummer angeschlossen ist, die Verbindung mit der Frankiermaschine nach einer definierten Zeitdauer aufnimmt und die Frankiermaschine nur zu vorbestimmten Zeiten antwortet. Außerdem ist vorgesehen, vor einer Guthabennachladung in die Frankiermaschine, zur Autorisierung durch die Datenzentrale die Identitätsnummer der Frankiermaschine und die Werte im fallenden und steigenden Register abzufragen.

Weiterhin ist aus o.g. Patent bekannt, daß die Kommunikation der Datenzentrale mit der Frankiermaschine nicht auf bloße Guthabenübertragung in die Frankiermaschine beschränkt zu bleiben braucht. Vielmehr wird im Falle einer Abmeldung der Frankiermaschine die Kommunikation der Datenzentrale mit der Frankiermaschine zur Übertragung des Restguthabens der Frankiermaschine in die Datenzentrale genutzt. Der Wert im fallenden Postregister der Frankiermaschine ist dann Null, was die Frankiermaschine wirksam außer Betrieb setzt.

Darüber hinaus ist aus der EP 388 840 A2 eine vergleichbare Sicherheitstechnik für ein Setzen einer Frankiermaschine bekannt, um diese von Daten zu säubern, ohne daß die Frankiermaschine zur Herstellerfirma transportiert werden muß. Auch hier ist die Sicherheit allein von der Verschlüsselung der übertragenen Code abhängig.

Aus der US 5 077 660 ist außerdem eine Methode zum Wechsel der Konfiguration der Frankiermaschine bekannt, wobei die Frankiermaschine mittels geeigneter Eingabe über eine Tastatur vom Betriebsmode in einen Konfigurationsmode umgeschaltet und eine neue Metertypnummer eingegeben werden kann, welche der gewünschten Anzahl an Merkmalen entspricht. Die Frankiermaschine generiert einen Code für die Kommunikation mit dem Computer der Datenzentrale und die Eingabe der Identifikationsdaten und der neuen Metertypnummer in vorgenannten Computer, der ebenfalls einen entsprechenden Code zur Übermittlung und Eingabe in die Frankiermaschine generiert, in der beide Code verglichen werden. Bei Übereinstimmung beider Code wird die Frankiermaschine konfiguriert und in den Betriebsmode umgeschaltet. Die Datenzentrale hat dadurch vom jeweils eingestellten Metertyp für die entsprechende Frankiermaschine immer genaue Aufzeichnungen. Jedoch ist die Sicherheit allein von der Verschlüsselung der übertragenen Code abhängig.

Aus der EP 516 403 A2 ist bekannt, die in der Vergangenheit protokollierten und in einem Speicher gespeicherten Fehler der Frankiermaschine regelmäßig zu einem entfernten Fehleranalysecomputer zur Auswertung zu übertragen. Eine solche Ferninspektion erlaubt eine frühe Warnung vor einem auftretenden Fehler und ermöglicht weitere Maßnahmen (Service) zu ergreifen.

Allein dies bietet noch kein ausreichendes Kriterium für eine Manipulation. Selbst wenn im Datenzentrum eine zusätzliche Ermittlung hinsichtlich eines Nutzers einer Frankiermaschine erfolgen würde, die vom Nutzer über das Inspektionsdatum hinaus weiterbetrieben wurde, könnte aus diesen Informationen noch nicht auf eine in Fälschungsabsicht vorgenommene Manipulation geschlußfolgert werden, wenn sich die Frankiermaschine nicht regelmäßig meldet. Eine Ursache für ein unregelmäßiges Melden bei der Datenzentrale kann auch ein schwankendes Postaufkommen sein.

Aus der US 4 811 234 ist bekannt, die Transaktionen verschlüsselt durchzuführen und dabei die Register der Frankiermaschine abzufragen und die Registerdaten der Datenzentrale zu übermitteln, um einen zeitlichen Bezug der Verringerung des im Register gespeicherten verfügungsberechtigten Betrages anzuzeigen. Einerseits identifiziert sich die Frankiermaschine bei der Datenzentrale, wenn ein voreinstellbarer Schwellwert erreicht ist, mittels ihres verschlüsselten Registerinhaltes.

Andererseits modifiziert die Datenzentale durch entsprechende Berechtigungssignale den gewünschten Frankierbetrag, bis zu dem frankiert werden darf. Die Verschlüsselung ist somit die einzige Sicherheit gegen eine Manipulation der Registerstände. Wenn also ein Manipulator zwar ordnungsgemäß immer den gleichen Betrag in gleichen zeitlichen Intervallen lädt, aber zwischenzeitlich mit der manipulierten Frankiermaschine einen viel höheren Betrag frankiert, als er bezahlt hat, kann die Datenzentrale keine Manipulation feststellen.

Die gesicherte Nachladung einer Frankiermaschine mit einem Guthaben wurde in US 3 255 439 einerseits bereits mit einer automatischen Signalübertragung von der Frankiermaschine zur Datenzentrale verbunden, wenn immer eine vorbestimmte Geldmittelsumme, welche frankiert wurde, oder Stückzahl an bearbeiteten Poststücken oder eine vorbestimmte Zeitperiode erreicht wurde.

Alternativ kann ein der Geldmittelsumme, Stückzahl oder Zeitperiode entsprechendes Signal übermittelt werden. Dabei erfolgt die Kommunikation mittels binärer Signale über miteinander über eine Telefonleitung verbundene Konverter. Die Maschine erhält eine ebenso gesicherte Nachladung entsprechend der Kreditbalance und blockiert in dem Fall, wenn kein Kredit nachgeliefert wird. Für die Übermittlung der Daten ist eine entsprechende Verschlüsselung erforderlich. Einem erhöhten Sicherheitsbedürfnis gegenüber einer Manipulation der Frankiermaschine kann mit dieser Lösung allein aber noch nicht entsprochen werden.

Gemäß der GB 22 33 937 A und US 5 181 245 kommuniziert die Frankiermaschine periodisch mit der Datenzentrale. Ein Blockiermittel gestattet der Frankiermaschine nach Ablauf einer vorbestimmten Zeit bzw. nach einer vorbestimmten Anzahl an Operationszyklen, zu blockieren und liefert eine Warnung an den Benutzer. Zum Freischalten muß von außen ein verschlüsselter Code eingegeben werden, welcher mit einem intern erzeugten verschlüsselten Code verglichen wird. Um zu verhindern, daß falsche Abrechnungsdaten an die Datenzentrale geliefert werden, werden in die Verschüsselung des vorgenannten Codes die Abrechnungsdaten mit einbezogen. Nachteilig ist, daß die Warnung zugleich mit dem Blockieren der Frankiermaschine erfolgt, ohne daß der Benutzer eine Möglichkeit hat, sein Verhalten rechtzeitig entsprechend zu ändern und die Datenzentrale vorher anruft.

Aus der US 5 243 654 ist eine Frankiermaschine bekannt, wo die laufenden von Uhr/Datumsbaustein gelieferten Zeitdaten mit gespeicherten Stillegungszeitdaten verglichen werden. Ist die gespeicherte Stillegungszeit durch die laufende Zeit erreicht, wird die Frankiermaschine deaktiviert, das heißt ein Drucken verhindert.

Bei Verbindungsaufnahme mit einer Datenzentrale, welche die Abrechnungsdaten aus dem steigenden Register ausliest, wird der Frankiermaschine ein verschlüsselter Kombinationswert übermittelt und eine neue Frist gesetzt, wodurch die Frankiermaschine wieder betriebsfähig gemacht wird. Dabei ist der Verbrauchssummenbetrag, der das verbrauchte Porto summiert enthält und von der Datenzentrale gelesen wird, ebenfalls Bestandteil des verschlüsselt übermittelten Kombinationswertes. Nach der Entschlüsselung des Kombinationswertes wird der Verbrauchssummenbetrag abgetrennt und mit dem in der Frankiermaschine gespeicherten Verbrauchssummenbetrag verglichen. Ist der Vergleich positiv, wird die Sperre der Frankiermaschine automatisch aufgehoben.

Durch diese Lösung wird erreicht, daß sich die Frankiermaschine bei der Datenzentrale periodisch meldet, um Abrechnungsdaten zu übermitteln. Es sind jedoch Benutzungsfälle durchaus denkbar, wo das zu frankierende Postaufkommen schwankt (Saisonbetrieb). In diesen Fällen würde in nachteiliger Weise die Frankiermaschine unnötig oft blockiert werden.

Es war die Aufgabe zu lösen, die Nachteile des Standes der Technik zu überwinden und einen signifikanten Zuwachs an Sicherheit ohne eine außerordentliche Inspektion vor Ort zu erreichen.

Die Aufgabe wird mit den Merkmalen des Anspruchs 1 gelöst.

Die erfindungsgemäße Lösung geht weiterhin davon aus, daß die in der Frankiermaschine gespeicherten Geldmittel vor unautorisiertem Zugriff geschützt werden müssen. Die Verfälschung von in der Frankiermaschine gespeicherten Daten wird so weit erschwert, daß sich der Aufwand für einen Manipulator nicht mehr lohnt.

Handelsübliche OTP-Prozessoren (ONE TIME PROGRAMMABLE) können alle sicherheitsrelevanten Programmteile im Inneren des Prozessorgehäuses enthalten, außerdem den Code zur Bildung des Message Authentification Code (MAC). Letzterer ist eine verschlüsselte Checksumme, die an eine Information angehängt wird. Als Kryptoalgorithmus ist beispielsweise Data Encryption Standard (DES) geeignet. Damit lassen sich MAC- Informationen an die sicherheitsrelevanten Registerdaten anhängen und somit die Schwierigkeit der Manipulation an den Postregistern maximal erhöhen.

Diese sicherheitsrelevanten Programmteile umfassen auch Programmteile für eine Flußkontrolle, die die Anzahl der abgelaufenen Programmteile überwacht. Damit können Fehlfunktionen des Mikroprozessors oder in Fälschungsabsicht vorgenommene Manipulationen aufgedeckt werden. Spezifische Rechenoperationen erlauben die Überprüfung, welche Programmteile wie oft benutzt wurden.

Das Verfahren zur Verbesserung der Sicherheit einer Frankiermaschine, welche zur Kommunikation mit einer entfernten Datenzentrale fähig ist und einen Mikroprozessor in einer Steuereinrichtung der Frankiermaschine aufweist, umfaßt ein Bilden einer Checksumme im OTP-Prozessor über den Inhalt des externen Programmspeichers und Vergleich des Ergebnisses mit einem im OTP-Prozessor gespeicherten vorbestimmten Wert vor und/oder nach Ablauf des Frankiermodus bzw. Betriebsmodus, insbesondere während der Initialisierung (d.h. wenn die Frankiermaschine gestartet wird), oder in Zeiten, in welchen nicht gedruckt wird (d.h. wenn die Frankiermaschine im Standby-Modus betrieben wird). Im Fehlerfall erfolgt dann eine Protokollierung und anschließende Blockierung der Frankiermaschine.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

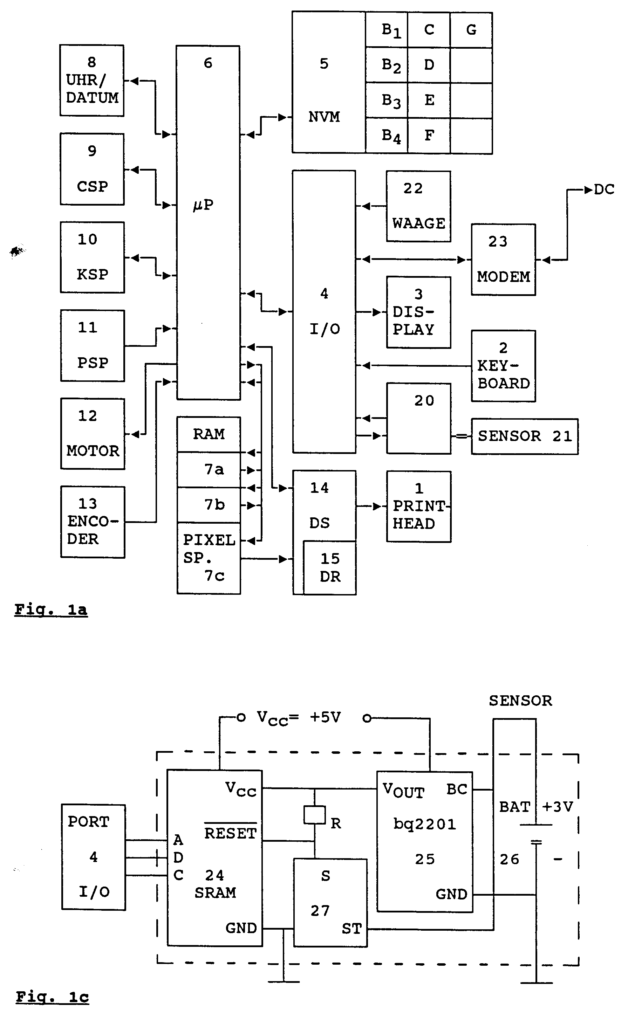

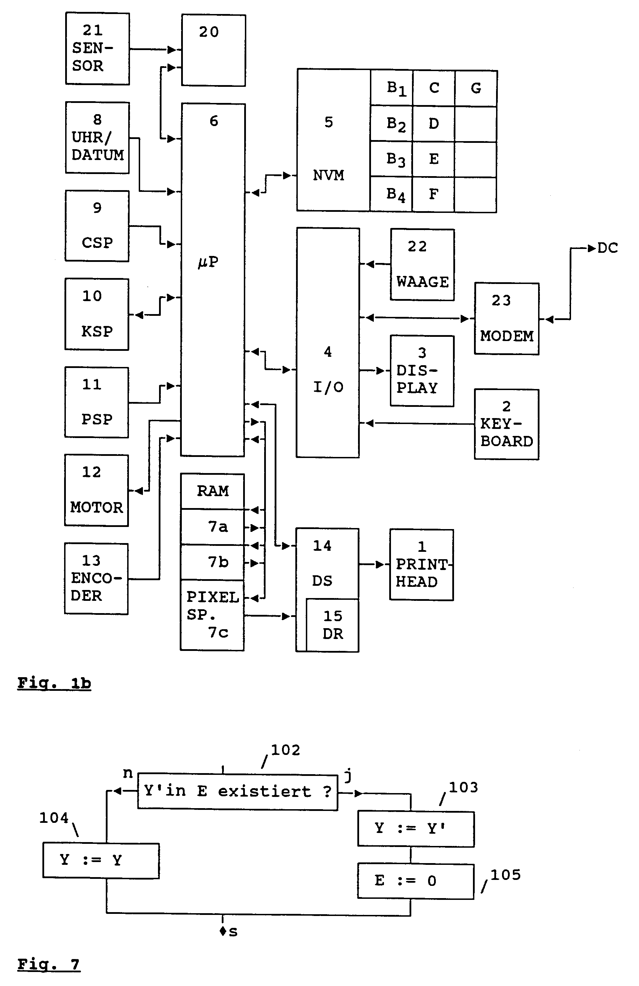

Figur 1a und 1b, Blockschaltbild einer Frankiermaschine mit erhöhter Sicherheit
Figur 1c, Schaltbild einer Detektoreinrichtung zur Ermittlung einer Öffnung des Gehäuses

| Figur 2a, | Ablaufplan nach einer ersten Variante |
|---|---|
| Figur 2b, | Ablaufplan nach einer zweiten Variante |
| Figur 3a und 3b, | Darstellung der Sicherheitsabläufe der im Kommunikationsmodus befindlichen Frankiermaschine und Datenzentrum |
| Figur 4a, | Ablaufplan für den Frankiermodus nach einer ersten Variante |
| Figur 4b, | Ablaufplan für den Frankiermodus nach einer zweiten Variante |
| Figur 5, | Ablaufplan für eine erste Sleeping-Mode-Variante |
| Figur 6, | Ablaufplan für eine zweite Sleeping-Mode-Variante |
| Figur 7, | Ablaufplan zur Codeworteinbringung |

Die Figuren 1a und 1b zeigen je ein Blockschaltbild der erfindungsgemäßen Frankiermaschine mit einem Druckermodul 1 für ein vollelektronisch erzeugtes Frankierbild, mit mindestens einem mehrere Betätigungselemente aufweisenden Eingabemittel 2, einer Anzeigeeinheit 3, einem Öffnungsversuche detektierenden Sensor 21 und einem die Kommunikation mit einer Datenzentrale herstellenden MODEM 23, welche über einen Ein/Ausgabe-Steuermodul 4 mit einer Steuereinrichtung 6 gekoppelt sind und mit einem nichtflüchtigen Speicher 5 bzw. 11 für die variablen bzw. die konstanten Teile des Frankierbildes.

Ein Charakterspeicher 9 liefert die nötigen Druckdaten für einen flüchtigen Arbeitsspeicher 7. Die Steuereinrichtung 6 weist einen Mikroprozessor µP auf, der mit dem Ein/Ausgabe-Steuermodul 4, mit dem Charakterspeicher 9, mit dem flüchtigen Arbeitsspeicher 7 und mit dem nichtflüchtigen Arbeitspeicher 5, mit einem Kostenstellenspeicher 10, mit einem Programmspeicher 11, mit dem Motor einer Transport- bzw. Vorschubvorrichtung ggf. mit Streifenauslösung 12, einem Encoder (Codierscheibe) 13 sowie mit einem Uhren/Datums-Baustein 8 in Verbindung steht. Die einzelnen Speicher können in mehreren physikalisch getrennten oder in nicht gezeigter Weise in wenigen Bausteinen zusammengefaßt verwirklicht sein, welche durch mindestens eine zusätzliche Maßnahme, beispielsweise Aufkleben auf der Leiterplatte, Versiegeln oder Vergießen mit Epoxidharz, gegen Entnahme gesichert sind.

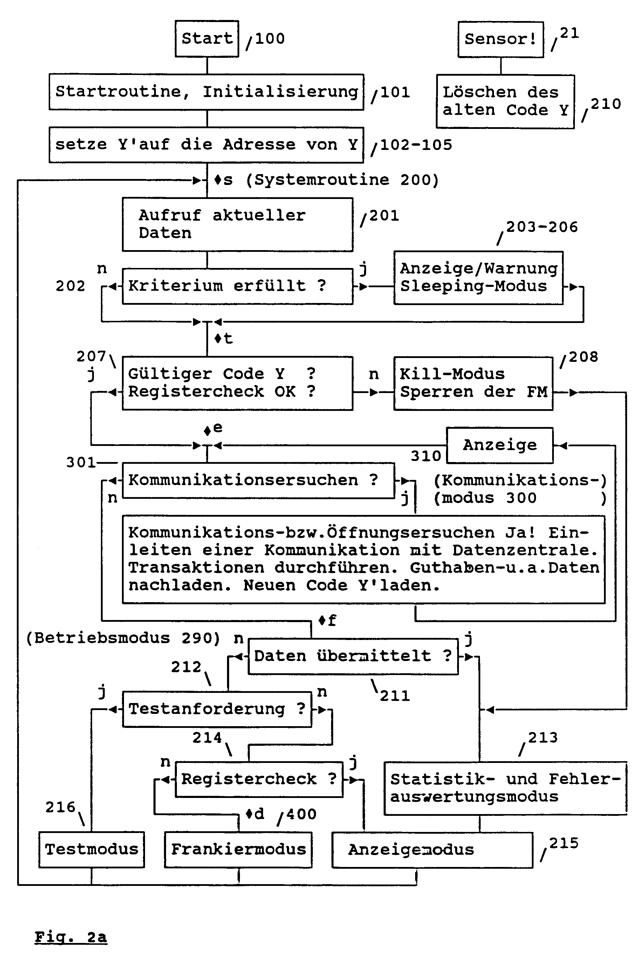

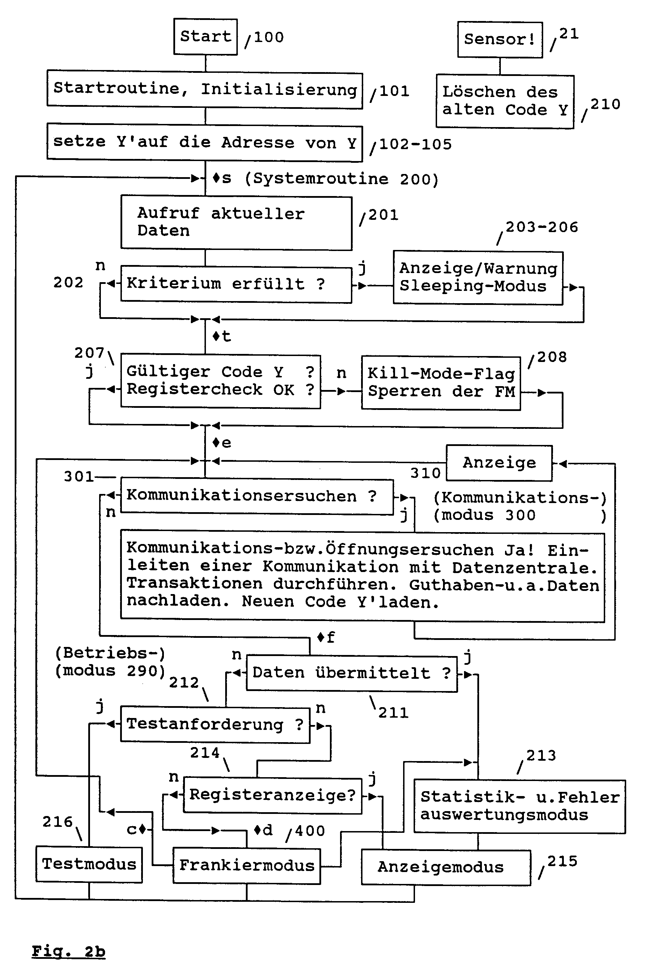

In der Figur 1a wirkt der Sensor 21 auf eine Detektoreinrichtung 20, welche über den Ein/Ausgabe-Steuermodul 4, nach dem Einschalten der Frankiermaschine mit einem Codewort Y unter vorbestimmten Bedingungen geladen wird, welches während des Betriebes der Frankiermaschine ausgelesen und auf Gültigkeit überprüft wird. Wie die Detektoreinrichtung 20 mit einem Codewort Y geladen wird, wird nachfolgend anhand der Figur 1c in Verbindung mit den Darlegungen zur Figur 2 erläutert.

Die Figur 1c zeigt ein Schaltbild einer Detektoreinrichtung 20 zur Ermittlung einer Öffnung des Gehäuses. Diese Detektoreinrichtung 20 umfaßt mindestens einen statischen Speicherbaustein 24 (SRAM) für das Codewort Y, einen Umschalter 25 und eine Primärbatterie 26, insbesondere eine Lithium-Zelle.

Der Umschalter 25 verbindet eine Netzteilausgangsspannung $V_{cc}$ = +5V mit dem SRAM 24, wenn die Frankiermaschine eingeschaltet betrieben wird. Ist die Frankiermaschine ausgeschaltet bzw. die Stromversorgung unterbrochen, wird das SRAM 24 aus der Primärbatterie 26, vorzugsweise mit einer Spannung von +3V versorgt. Damit bleibt der Speicherinhalt im SRAM solange erhalten, bis über den Sensor 21 oder durch die Primärbatterie 26 die Versorgung eingestellt wird.

In einer Vorzugsvariante ist ein solcher Sensor ein elektrisch leitender Streifen, der den Kontakt zwischen der Langzeitbatterie (Lithium-Batterie) und den zu versorgenden Einrichtungen 25 bzw. 24, die als Speicherbaustein (CMOS-SRAM) für das Codewort Y ausgeführt ist, herstellt. Ein Schalter 27 ist mit der von der Umschalteinrichtung 25 gelieferten Versorgungsspannung über einen Widerstand R und mit Masse-Potential verbunden.

Der Abgriff zwischen dem Widerstand R und dem Schalter 27 führt auf den Rücksetzeingang des Speicherbausteins 24 für das Codewort Y. Der Schalter 27 kann beispielsweise ein npn-Transistor sein, der mit seinem Kollektor am Rücksetzeingang angeschlossen ist und mit seinem Emitter auf Masse-Potential liegt. Seine Basis ist über einen Impedanzwandler mit dem BC-Eingang der Umschalteinrichtung 25 verbunden, welcher über den Sensor 21 mit dem + Pol der Batterie 26 verbunden ist. Der Impedanzwandler ist ein Negator in CMOS-3V-Technik. Die Umschalteinrichtung 25, wofür vorzugsweise der Baustein bq 2201 eingesetzt wird, liefert während des Betriebes der Frankiermaschine eine Netzteilspannung $V_{cc}$ = +5 V und während des Nichtbetriebes eine Batteriespannung von +3 V, um den Speicherinhalt zu erhalten. Wird der Sensor 21 während des Nichtbetriebes aktiviert, fehlt die Speicherinhalterhaltungsspannung. Wird der Sensor 21 aber während des Betriebes aktiviert, wird der Speicherinhalt über den Rücksetzeingang gelöscht.

In einer - in der Figur 1c nicht gezeigten - modifizierten Variante kann mittels des Sensors 21 auch eine andere Verbindung unterbrochen werden, worauf die Detektoreinrichtung 20 reagiert. Solch ein elektrisch leitender Streifen kann manuell für jede Maschine individuell anders verlegt sein. Wesentlich ist hierbei, daß jegliches Öffnen des Gehäuses den Streifen bewegt und somit den vorgenannten Kontakt unterbricht.

Der Streifen wird beispielsweise beim Zusammenbau zunächst locker verlegt und erst nach dem Zusammenbau bzw. kurz vor dem endgültigen Schließen der Gehäuseschalen straff gezogen, d.h. der vorgenannte Kontakt wird hergestellt.

Eine vorteilhafte weitere Sensor-Variante besteht in der Ausbildung der Gehäuseschalen als Sicherheitskapsel.

Die Sicherheitskapsel ist mit mäanderförmigen Leiterbahnen ausgebildet, durch welche ein geringer Überwachungsstrom bzw. Ladungserhaltungsstrom für ein CMOS-RAM fließt. Jede Öffnung führt zu einer Stromunterbrechung. Damit geht eine Information verloren, die der Manipulator nicht ersetzen kann. Nach dem Schließen des Gehäuses verhindert die Systemroutine, daß die Maschine in den Frankiermodus gelangt.

In der Figur 1b ist eine zweite Variante mit direkt an den Mikroprozessor der Steuereinrichtung angekoppelter Einrichtung 20 dargestellt, welche ebenfalls durch einen Sensor 21 beeinflußbar ist. Der Sensor 21 und die Detektoreinrichtung können auf unterschiedliche Weise realisiert werden.

So verwendet eine weitere Variante der Detektoreinrichtung 20 ein programmierbares Logikarray, welche durch den Sensor 21 beeinflußbar ist. Der Sensor bewirkt über die Einrichtung eine andere Programmverzweigung während des Ablaufes der Systemroutine. Nach dem Schließen des Gehäuses verhindert dann die Systemroutine abermals, daß die Maschine in den Frankiermodus gelangt.

In der Figur 2a ist ein Ablaufplan für eine Frankiermaschine mit einem Sicherheitssystem nach einer ersten Variante dargestellt. Es ist ständig bei Betrieb und Nichtbetrieb der Frankiermaschine ein Schritt 210 vorgesehen, wenn durch einen Sensor 21 ein Öffnen der Frankiermaschine festgestellt wird.

Nach dem Einschalten der Frankiermaschine im Schritt Start 100 wird anschließend innerhalb einer Startroutine 101 eine Funktionsprüfung mit anschließender Initialisierung vorgenommen.

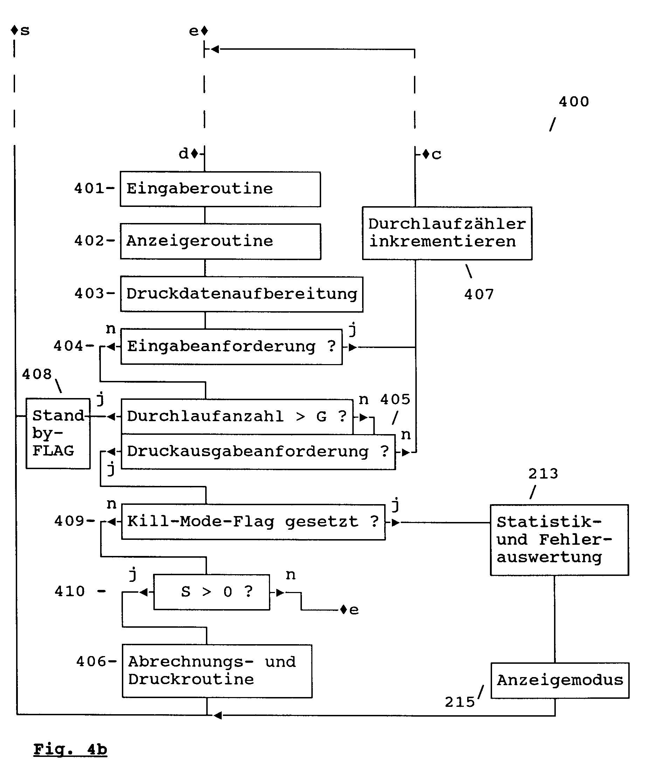

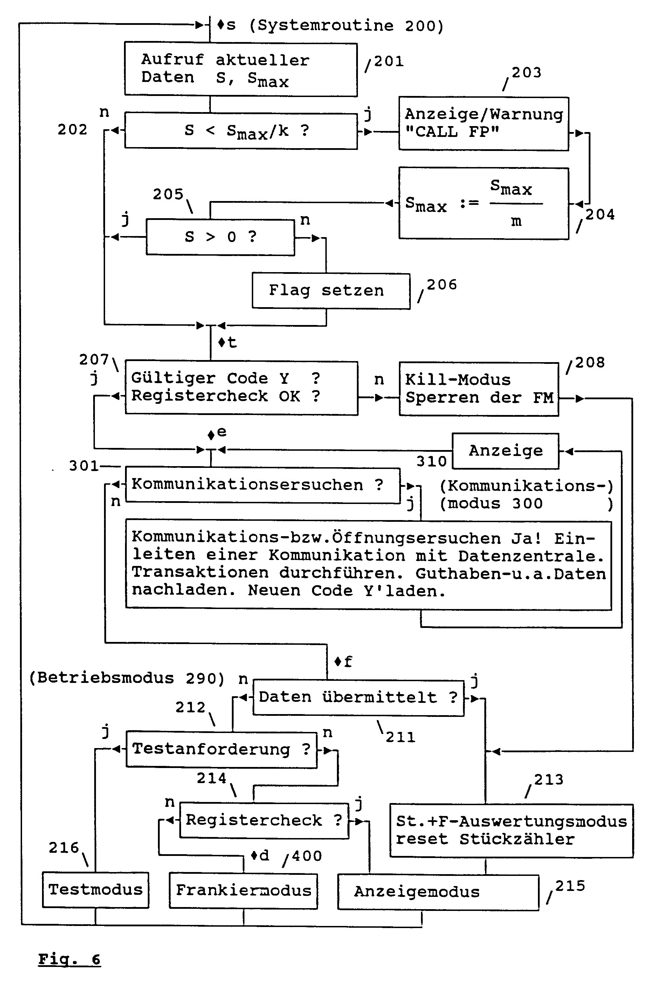

Im nachfolgenden - mehrere, in der Figur 7 näher dargestellte, Subschritte 102 bis 105 umfassenden - Schritt wird ein neues Codewort Y'- jedoch nur, wenn gemäß Schritt 102 ein solches in einem anderen vorbestimmten Speicherplatz E des nichtflüchtigen Speichers 5 existiert - in den Speicherplatz des alten Codewortes Y kopiert (Schritt 103), falls dort kein gültiges Codewort Y mehr gespeichert vorliegt. Letzteres betrifft gleichermaßen den Fall einer autorisierten als auch unautorisierten Öffnung, weil bei jeder Öffnung des Gehäuses das alte Codewort Y gelöscht wird. Bei Nichtöffnung wird nicht kopiert und nach Schritt 104 bleibt das alte Codewort im Speicher 20 erhalten. Nun wird am Punkt s die Systemroutine 200 erreicht. Diese umfaßt mehrere Schritte 201 bis 215 des Sicherheitssystems. Im Schritt 201 erfolgt der Aufruf aktueller Daten, was weiter unten in Verbindung mit der Erläuterung zu den Figuren 5 und 6 näher für den Sleeping-Mode ausgeführt wird.

Nachfolgend wird - wie in der Figur 2a dargestellt - im Schritt 202 überprüft, ob die Kriterien für den Eintritt in den Sleeping-Mode erfüllt sind. Ist das der Fall wird zum Schritt 203 verzweigt, um mindestens eine Warnung mittels der Anzeigeeinheit 3 anzuzeigen. Dabei können weitere Schritte 204 bis 206 durchlaufen werden, bevor zum Schritt 207 verzweigt wird. Ist das aber nicht der Fall wird ebenfalls zum Schritt 207 verzweigt. Nach den o.g. Schritten wird im jeden Fall der Punkt t erreicht.

Im Schritt 207 wird - wie das in der europäischen Anmeldung mit dem amtlichen Aktenzeichen 93103951.5 näher erläutert wird - mindestens eine Registerprüfung der Datenstruktur der Postregister durchgeführt, um die Fehler zu protokollieren. Im Schritt 208 werden darüber hinaus Maßnahmen ergriffen, um die Frankiermaschine bei Registerdatenstrukturfehlern zu sperren.

Natürlich könnte ein Betrüger, der in die Frankiermaschine einbricht, eine solche Manipulation ausführen, um die Postregister stimmig zu verändern. Diese Manipulation könnte erst in Verbindung mit den Daten der Datenzentrale bei der nächsten Fernabfrage der Register aufgedeckt werden, falls sie nicht vorher rückgängig gemacht wird, denn ein Manipulator ist bestrebt, seine Spuren zu verwischen. Deshalb ist erfindungsgemäß vorgesehen, daß mindestens noch eine Überprüfung erfolgt, ob ein gültiger Code Y im vorbestimmten Speicherplatz der Einheit 20 vorliegt. Ist das nicht der Fall, wird zum Schritt 208 verzweigt.

Die Überprüfung auf gültigen Code Y wird beispielsweise mittels einem ausgewählten Prüfsummenverfahren innerhalb eines OTP-Prozessors (ONE TIME PROGRAMMABLE) durchgeführt, der intern die entsprechenden Programmteile und außerdem den Code zur Bildung eines MAC (MESSAGE AUTHENTIFICATION CODE) gespeichert enthält, weshalb der Manipulator die Art des Prüfsummenverfahrens nicht nachvollziehen kann. Auch weitere sicherheitsrelevante Schlüsseldaten und Abläufe sind ausschließlich in Inneren des OTP-Prozessors gespeichert, um eine MAC-Absicherung über die Postregister zu legen.

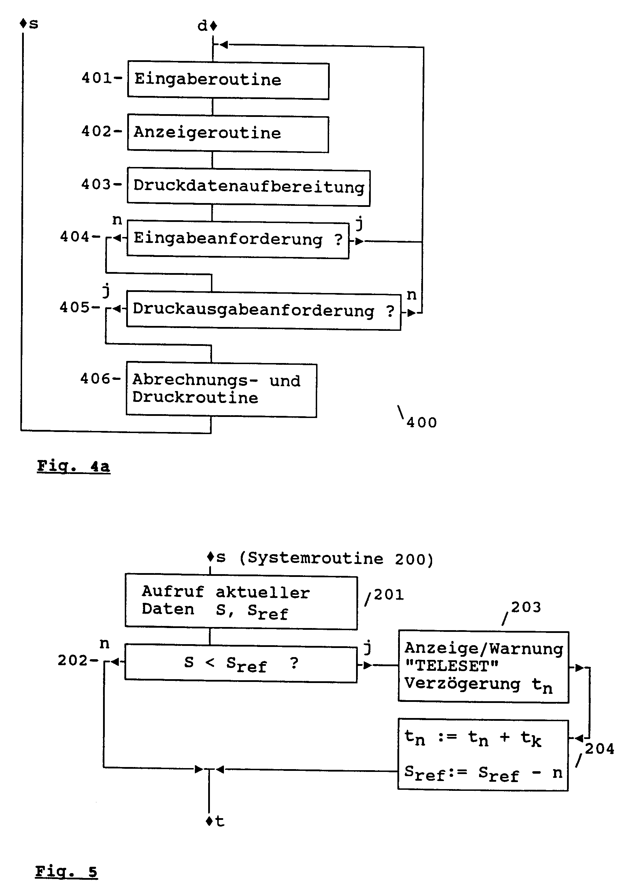

Eine weitere Sicherungsvariante, welche ohne OTP-Prozessor auskommt, besteht im Erschweren des Auffindens der Schlüssel durch dessen Kodierung und partielle Ablage in unterschiedlichen Speicherbereichen. Wieder werden MAC an jede Information in den sicherheitsrelevanten Registern angehängt. Eine Manipulation der Registerdaten kann durch Kontrolle über den MAC erkannt werden. Diese Routine erfolgt im Schritt 406 im Frankiermodus, der in den Figuren 4a, b dargestellt ist. Damit läßt sich die Schwierigkeit der Manipulation an den Postregistern maximal erhöhen.

Mit dem Schritt 208 ist der Killmode erreicht und die Frankiermaschine ist gesperrt. Im Schritt 208 werden vorzugsweise die Postregister in vorbestimmter Weise teilweise gelöscht. Über den Schritt 213 wird der Anzeigemodus 215 erreicht und dann zur Systemroutine zurückverzweigt. Das Sperren kann vorteilhaft erfolgen, indem die Verzweigung auf den Frankiermodus 400 nicht mehr ausgeführt wird.

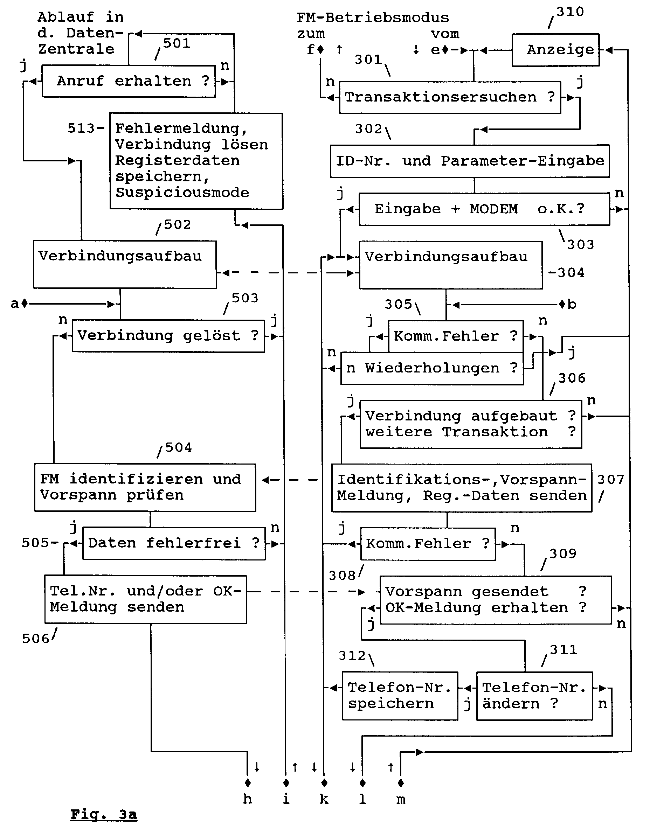

Bei erfolgter Prüfung im Schritt 207, ohne daß relevante Mängel festgestellt wurden, wird der Punkt e, d.h. der Beginn eines Kommunikationsmodus 300 erreicht und in einem - in den Figuren 2a, b und 3a dargestellten - Schritt 301 abgefragt, ob ein Transaktionsersuchen vorliegt. Ist das nicht der Fall, wird der Kommunikationsmodus 300 verlassen und der Punkt f, d.h. der Betriebsmodus 290 erreicht. Wurden relevante Daten im Kommunikationsmodus übermittelt, dann ist zur Datenauswertung auf den Schritt 213 zu verzweigen. Oder anderenfalls, wenn im Schritt 211 die Nichtübermittlung festgestellt wird, ist auf den Schritt 212 zu verzweigen. Nun wird überprüft, ob entsprechende Eingaben getätigt worden sind, um bei Testanforderung 212 in den Testmodus 216, anderenfalls um bei beabsichtigter Registerstandüberprüfung 214 in einen Anzeigemodus 215 zu gelangen. Ist das nicht der Fall, wird automatisch der Punkt d, d.h. der Frankiermodus 400 erreicht.

Es ist weiterhin vorgesehen, daß im Schritt 213 eine Statistik- und Fehlerauswertung durchgeführt wird, um weitere aktuelle Daten zu gewinnen, welche nach Verzweigung zur Systemroutine 200 in Schritt 201 ebenfalls aufrufbar sind.

Im Falle einer Öffnung des Frankiermaschinengehäuses durch dazu befugte Personen ist eine schriftliche ggf. fernmündliche Anmeldung im Datenzentrum zur autorisierte Öffnung erforderlich, welche das Öffnungsdatum und die Uhrzeit für den ungefähren Öffnungsbeginn mitteilt. Bevor dann die Frankiermaschine tatsächlich geöffnet werden kann, muß über MODEM eine Kommunikation mit dem Datenzentrum aufgenommen werden, um die Öffnungsbefugnis zu ersuchen und einen neuen zukünftigen Code Y' zu laden, der den alten ersetzen kann.

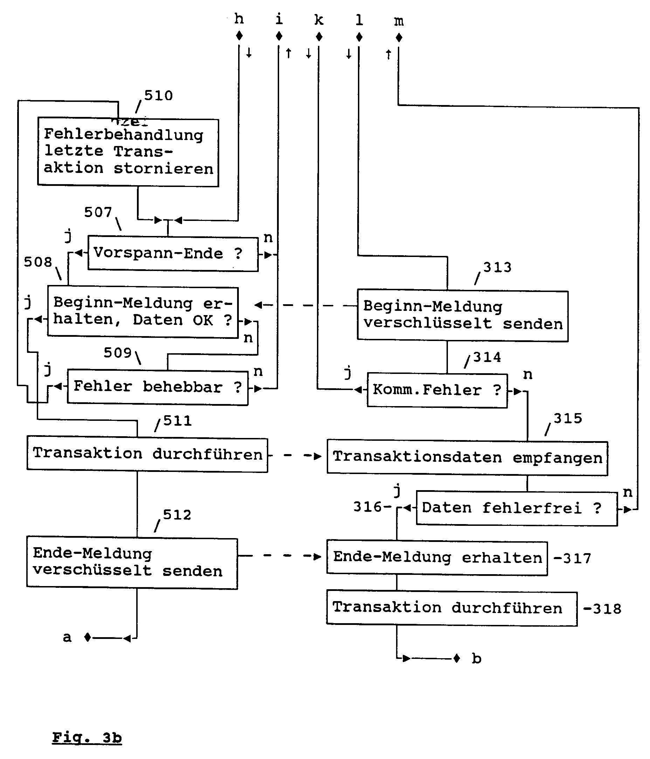

In den Figuren 3a und 3b erfolgt eine Darstellung der Sicherheitsabläufe der im Kommunikationsmodus befindlichen Frankiermaschine einerseits und der Sicherheitsabläufe der im Kommunikationsmodus befindlichen Datenzentrale andererseits.

Wird der Punkt e, d.h. der Beginn des nachfolgend erläuterten Kommunikationsmodus 300 erreicht, wird in einem - in den Figuren 2 und 3a dargestellten - Schritt 301 abgefragt, ob ein Transaktionsersuchen vorliegt. Ein solches kann beispielsweise zur Guthabennachladung, Telefonnummernänderung u.a. gestellt werden.

Der Benutzer wählt den Kommunikations- bzw. Fernwertvorgabemodus der Frankiermaschine über die Eingabe der Identifikationsnummer (achtstelligen Portoabrufnummer) an. Es wird nun beispielsweise angenommen, es soll die Kommunikation erfolgen, um einen neuen zukünftigen Code Y' zu laden, der den alten ersetzen kann. Wird nur ein solches Transaktionsersuchen gestellt, muß der Vorgabebetrag auf Null geändert werden, denn in diesem Fall muß das Guthaben in der Frankiermaschine natürlich nicht aufgestockt werden.

Im Schritt 302 kann eine Eingabe der Identifikations-Nummer (ID-Nr.) und der beabsichtigten Eingabeparameter auf folgende Weise erfolgen. Bei der ID-Nr. kann es sich um die Serien-Nummer der Frankiermaschine, um eine PIN bzw. PAN (Portoabrufnummer) handeln, die durch Betätigung mittels vorbestimmter T-Taste des Eingabemittels 2 quittiert wird. In der Anzeigeeinheit 3 erscheint de r bei der letzten Fernwertvorgabe(Nachladung) benutzte Eingabeparameter(Vorgabewert), der nun durch die Eingabe des gewünschten Eingabeparameters überschrieben oder beibehalten wird. Beim Eingabeparameter handelt es sich um eine Zahlenkombination, welche in der Datenzentrale als Aufforderung verstanden wird, ein neues Codewort Y' zu übermitteln, wenn zuvor eine Öffnungsbefugnis eingeholt worden ist. Bei Falscheingabe des vorgenannten Eingabeparameters kann die Anzeige durch Drücken einer C-Taste gelöscht werden.

Beispielsweise wird eine Änderung eingegeben, um bei einer Transaktion ein Guthaben mit dem Wert Null zu laden, aber es wird keine Öffnungsbefugnis zuvor eingeholt. Somit dient der Eingabeparameter nur als neuer Vorgabewert. Dabei wird aber weder das Guthaben für Frankierungen wertmäßig erhöht, wenn der Eingabeparameter den Wert Null hat, noch ein neues Codewort geladen. Jedoch kann bei jeder Kommunikation eine Stückzahl S'übermittelt werden.

Nur durch das vorhergehende Anmelden, beispielsweise mittels eines separaten Anrufes bei der Datenzentrale oder einer anderen Kommunikationsform, wird der Datenzentrale mitgeteilt, daß ein neues Codewort Y' zur Frankiermaschine übermittelt werden soll, wenn anschließend innerhalb einer vorbestimmten Zeitdauer seitens der Frankiermaschine eine Transaktion für den Wert Null gestartet wird. Das Öffnungsgesuch gilt nur dann als gestellt, wenn nach dem Anmelden einer autorisierten Öffnung die Frankiermaschine in den so vereinbarten Kommunikationsmodus eintritt.

Wird aber zuvor ein beliebig anderer Eingabeparameter mit der Datenzentrale vereinbart, erfolgt bei Eingabe dieses Eingabeparameters außer der Nachladung des Guthabens entsprechend des durch den Eingabeparameter eingegebenen Vorgabewertes auch noch - während einer zusätzlichen Transaktion - das Nachladen eines neuen zukünftigen Code Y'.

Wird ein anderer Eingabeparameter als der vereinbarte eingegeben, führt dies im Ergebnis lediglich zur Nachladung in Höhe des gewählten neuen Vorgabebetrages.

Ist der gewünschte Eingabeparameter richtig angezeigt, wird dies durch erneutes Betätigen der vorbestimmten T-Taste des Eingabemittels 2 bestätigt. In der Anzeigeeinheit 3 erscheint dann eine Darstellung entsprechend einer Eingabeparameteränderung oder entsprechend der Nichtänderung (alter Vorgabewert).

Durch Betätigung der vorbestimmten T-Taste wird die Veränderung des Eingabeparameters über MODEM-Verbindung gestartet. Die Eingabe überprüft (Schritt 303) und der weitere Vorgang läuft automatisch ab, wobei der Ablauf durch eine entsprechende Anzeige begleitet wird.

Dazu prüft die Frankiermaschine, ob ein MODEM angeschlossen und betriebsbereit ist. Ist das nicht der Fall, wird auf den Schritt 310 verzweigt, um anzuzeigen, daß das Transaktionsersuchen wiederholt werden muß. Anderenfalls liest die Frankiermaschine die Wahlparameter, bestehend aus den Herauswahlparametern (Haupt-/Nebenstelle, usw.) und der Telefonnummer aus dem NVRAM-Speicherbereich F und sendet diese mit einem Wahlanforderungskommando an das Modern 23. Anschließend erfolgt der für die Kommunikation erforderliche Verbindungsaufbau über das MODEM 23 mit der Datenzentrale in einem Schritt 304.

In der Figur 3a ist auf der linken Hälfte ebenfalls der parallel erfolgende Ablauf in der Datenzentrale dargestellt, welcher für die Kommunikation notwendig ist. Im Schritt 501 wird ständig geprüft, ob ein Anruf in der Datenzentrale erfolgt ist. Ist das der Fall, und das MODEM 23 hat die Gegenseite angewählt, erfolgt im Schritt 502 parallel der Verbindungsaufbau auch in der Datenzentrale. Und im Schritt 503 wird ständig überwacht, ob die Verbindung zur Datenzentrale gelöst wurde. Ist das der Fall, erfolgt nach einer Fehlermeldung im Schritt 513 eine Rückverzweigung zum Schritt 501.

Parallel dazu wird in der Frankiermaschine im Schritt 305 überwacht, ob Kommunikationsfehler aufgetreten sind und gegebenenfalls zum Schritt 304 zurückverzweigt, um seitens der Frankiermaschine die Verbindung erneut aufzubauen. Nach einer vorbestimmten Anzahl n ergebnisloser Wahlwiederholungen zwecks Verbindungsaufbau wird über einen Anzeigeschritt 310 auf den Punkt e zurückverzweigt. Lag kein im Schritt 305 ermittelbarer Fehler vor, wird im Schritt 306 seitens der Frankiermaschine festgestellt, daß die Verbindung aufgebaut ist und eine Transaktion erst noch erfolgen soll, wird auf den Schritt 307 verzweigt, um eine Eröffnungsnachricht bzw. um Identifikations-, Vorspann- bzw. Registerdaten zu senden. Im nachfolgenden Schritt 308 wird die gleiche Überprüfung, wie im Schritt 305 durchgeführt, d.h. bei einem aufgetretenen Kommunikationsfehler wird zum Schritt 304 zurückverzweigt. Anderenfalls wurde eine Eröffnungsnachricht von der Frankiermaschine an die Datenzentrale geschickt. Darin ist u.a. die Portoabrufnummer zur Bekanntmachung des Anrufenden, d.h. der Frankiermaschine, bei der Datenzentrale enthalten.

Diese Eröffnungsnachricht wird in der Datenzentrale im Schritt 504 auf Plausibilität überprüft und weiter ausgewertet, indem anschließend im Schritt 505 wieder überprüft wird, ob die Daten fehlerfrei übermittelt worden sind. Ist dies nicht der Fall, erfolgt eine Rückverzweigung zur Fehlermeldung auf den Schritt 513. Sind andererseits die Daten fehlerfrei und in der Datenzentrale wird erkannt, daß die Frankiermaschine ein Öffnungsersuchen gestellt hat und ein neues Codewort Y' abfordert, so wird im Schritt 506 eine Erwiderungsnachricht zur Frankiermaschine als Vorspann gesendet. Im Schritt 507 wird überprüft, ob im Schritt 506 die Vorspannmeldung einschließlich Vorspann-Ende gesendet worden ist. Ist das aber nicht der Fall, dann wird auf den Schritt 513 zurückverzweigt.

In der Frankiermaschine wird im Schritt 309 geprüft, ob von der Datenzentrale inzwischen ein Vorspann als Erwiderungsnachricht gesendet bzw. empfangen wurde. Ist das nicht der Fall, wird zur Anzeige auf den Schritt 310 zurückverzweigt und danach erneut ein Transaktionsersuchen im Schritt 301 abgefragt. Wurde ein Vorspann empfangen und die Frankiermaschine hat eine OK-Meldung erhalten, erfolgt im Schritt 311 eine Überprüfung der Vorspannparameter hinsichtlich einer Telefonnummernänderung. Wenn ein verschlüsselter Parameter übermittelt wurde, liegt keine Telefonnummernänderung vor und es wird auf den Schritt 313 in der Figur 3b verzweigt.

In der Figur 3b erfolgt eine Darstellung der Sicherheitsabläufe der im Kommunikationsmodus befindlichen Frankiermaschine und parallel dazu derjenigen in der Datenzentrale.

Im Schritt 313 wird von der Frankiermaschine an die Datenzentrale eine Beginnmeldung verschlüsselt gesendet. Im Schritt 314 wird die Meldung auf Kommunikationsfehler überprüft. Liegt ein Kommunikationsfehler vor, wird zum Schritt 304 zurückverzweigt und es erfolgt erneut ein Versuch, die Verbindung zur Datenzentrale aufzubauen, um die Beginn-Meldung verschlüsselt zu senden.

Von der Datenzentrale wird diese verschlüsselte Beginn-Meldung empfangen, wenn im Schritt 506 die Vorspann-Meldung vollständig gesendet worden war und im Schritt 507 das Vorspann-Ende übermittelt worden ist. Im Schritt 508 wird in der Datenzentrale überprüft, ob diese die Beginn-Meldung erhalten hat und die Daten in Ordnung sind. Ist das nicht der Fall, wird im Schritt 509 überprüft, ob der Fehler behebbar ist. Ist der Fehler nicht behebbar, wird auf den Schritt 513 verzweigt. Anderenfalls wird im Schritt 510 eine Fehlerbehandlung durchgeführt und auf den Schritt 507 verzweigt. Wird im Schritt 508 der Empfang ordnungsgemäßer Daten festgestellt, beginnt die Datenzentrale im Schritt 511 eine Transaktion durchzuführen. Im vorgenannten Beispiel wird ein neues Codewort Y' verschlüsselt zur Frankiermaschine übertragen, welche im Schritt 315 die Transaktionsdaten empfängt.

Im nachfolgenden Schritt 316 werden die Daten geprüft. Liegt ein Fehler vor, wird auf den Schritt 310 zurückverzweigt. Anderenfalls wird auf die Ende-Meldung gewartet, die die Datenzentrale im Schritt 512 verschlüsselt an die Frankiermaschine sendet. Nach Empfang dieser Ende-Meldung im Schritt 317 wird im Schritt 318 ebenfalls in der Frankiermaschine die Transaktion durchgeführt. Ein neues Codewort Y' liegt nun in der Frankiermaschine gespeichert vor und es wird zum Schritt 305 zurückverzweigt. Soll keine weitere Transaktion erfolgen, wird zur Anzeige der Schritt 310 und danach Schritt 301 erreicht.

Wenn nun kein Transaktionsersuchen gestellt wird, wird im Schritt 211 überprüft, ob Daten übermittelt worden sind. Wurden Daten übermittelt, wird der Schritt 213 erreicht. Entsprechend des Eingabewunsches plaziert die Frankiermaschine das neue Codewort Y' beispielsweise im Speicherbereich E des nichtflüchtigen Speichers 5.

Wird als Eingabeparameter im Schritt 302 aber eine andere Zahlenkombination als Null eingegeben und die Eingabe war in Ordnung (Schritt 303), erfolgt ein Verbindungsaufbau (Schritt 304). Und wenn ohne Fehler (Schritt 305) eine Verbindung aufgebaut vorliegt (Schritt 306), wird eine Identifizierungs- und Vorspann-Meldung an die Datenzentrale gesendet. In dieser Eröffnungsnachricht ist wieder u.a. auch die Portoabrufnummer PAN zur Identifizierung der Frankiermaschine bei der Datenzentrale enthalten. Die Datenzentrale erkennt aus der eingegebenen Zahlenkombination, falls die Daten fehlerfrei sind (Schritt 505), daß in der Frankiermaschine beispielsweise ein Guthaben aufgestockt aber kein neues Codewort Y' übermittelt werden soll.

Hat sich inzwischen die aktuelle Telefonnummer der Datenzentrale geändert, müssen Maßnahmen ergriffen werden, daß diese in der Frankiermaschine gespeichert wird. Im Schritt 506 wird dann von der Datenzentrale eine Erwiderungsnachricht mit den Elementen Änderung der Telefonnummer und aktuelle Telefonnummer unverschlüsselt gesendet. Die Frankiermaschine, die diese Meldung erhält, erkennt im Schritt 311, daß die Telefonnummer geändert werden soll. Nun wird zum Schritt 312 verzweigt, um die aktuelle Telefonnummer zu speichern. Anschließend wird auf den Schritt 304 zurückverzweigt. Ist die Verbindung noch aufgebaut und ein Kommunikationsfehler liegt nicht vor (305), wird im Schritt 306 anschließend geprüft, ob eine weitere Transaktion erfolgen soll. Wenn das nicht der Fall ist, wird über den Schritt 310 zum Schritt 301 verzweigt.

Nach erfolgter Abspeicherung der aktuellen Telefonnummer baut die Frankiermaschine automatisch eine neue Verbindung zur Datenzentrale unter Zuhilfenahme der neuen Telefonnummer auf. Die eigentliche, vom Benutzer beabsichtigte Transaktion, eine Fernwertvorgabe des neuen Codewortes Y' oder eines Nachladeguthabens wird somit automatisch, d.h. ohne einen weiteren Eingriff durch den Benutzer der Frankiermaschine, durchgeführt. In der Anzeige erscheint eine entsprechende Mitteilung, daß aufgrund der Telefonnummernänderung die Verbindung automatisch neu aufgebaut wird.

Es ist vorgesehen, daß nach einer Öffnung des Gehäuses, d.h. nach einem Eingriff, das Gehäuse der Frankiermaschine geschlossen wird und daß nach dem Schließen des Gehäuses die Frankiermaschine in den Kommunikationsmodus 300 gesteuert wird. Der Berechtigte kann auch der Datenzentrale die beendete Überprüfung noch mitteilen.

Eine Kommunikation kann eine Telefonnummernspeicherung, als auch eine Guthabennachladung umfassen. Ohne Unterbrechung der Kommunikation können so mehrere Transaktionen durchgeführt werden. Soll die Höhe des nachzuladenden Guthabens in der gleichen Höhe verbleiben, wie bei der letzten Guthabennachladung, ist nur eine Transaktion notwendig. Diese erfolgt in der gleichen Weise wie beim Nachladen eines neuen Codewortes Y'. Soll die Höhe des nachzuladenden Guthabens aber geändert werden, sind zwei Transaktionen erforderlich. Beide Transaktionen erfolgen auf die gleiche Weise wie beim Nachladen des neuen Codewortes Y'. Während einer Transaktion wird eine Nachricht übermittelt. Jede übermittelte Nachricht ist einzeln verschlüsselt. Eine gelungene Transaktion läuft dabei wie folgt ab: Die Frankiermaschine schickt ihre ID-Nummer und einen Vorgabewert für die Höhe des gewünschten Nachladeguthabens zusammen mit einem MAC an die Datenzentrale. Diese prüft eine derartige übermittelte Nachricht gegen den MAC, um dann eine ebenfalls MAC-gesicherte OK-Meldung an die Frankiermaschine zu senden. Die OK-Meldung enthält den Vorgabewert nicht mehr.

Es ist vorgesehen, daß die Übermittlung eines neuen Codewortes Y', eine Änderung der Guthabennachladehöhe und eines neuen Nachladeguthabens in verschlüsselter Form, aber die Übermittlung von Telefonnummer in unverschlüsselter Form erfolgt. Wird in der Datenzentrale festgestellt, daß die Verbindung zur Frankiermaschine gelöst wurde (Schritt 503) oder fehlerhafte Daten (505) bzw. nicht behebbare Fehler (509) vorliegen oder kein Vorspannende gesendet wurde (507), ist die Kommunikation beendet. Nach einer Fehlermeldung erfolgt das Lösen der Kommunikationsverbindung, das Speichern der übermittelten Daten und deren Auswertung im Schritt 513 seitens der Datenzentrale.

Ein Transaktionsersuchen führt in der Frankiermaschine zu einer speziell gesicherten Guthabennachladung. Vorzugsweise erfolgt ein Absichern der außerhalb des Prozessors im Kostenstellenspeicher 10 vorliegenden Postregister außerdem während der Guthabennachladung mittels einer Zeitsteuerung. Wird die Frankiermaschine beispielsweise mit einem Emulator/Debugger observiert, dann ist es wahrscheinlich, daß die Kommunikations- und Abrechnungsroutinen nicht innerhalb einer vorbestimmten Zeit ablaufen. Ist das der Fall, d.h. die Routinen benötigen erheblich mehr Zeit, wird ein Teil des DES-Schlüssels geändert. Das Datenzentrum, kann diesen modifizierten Schlüssel während einer Kommunkikationsroutine feststellen und daraufhin die Frankiermaschine als suspekt melden, sobald gemäß Schritt 313 eine Beginn-Meldung verschlüsselt gesendet wird.

In der Datenzentrale wird im Schritt 509 festgestellt, daß der Fehler nicht behebbar ist. Die Datenzentrale kann dann keine Transaktion (Schritt 511) durchführen, weil zum Schritt 513 zurückverzweigt wurde. Da in der Frankiermaschine im Schritt 315 keine Daten empfangen wurden, war die Transaktion nicht fehlerfrei erfolgt (Schritt 316). Dann wird also über den Schritt 310 auf den Schritt 301 zurückverzweigt, um nach einer Anzeige erneut zu prüfen, ob ein Transaktionsersuchen weiterhin gestellt wird.

Ist das nicht der Fall, wird der Kommunikationsmodus 300 verlassen und der Punkt f, d.h. der Betriebsmodus 290 erreicht. Somit konnten im oben erörterten Fall, mit modifizierten DES-Schlüssel, keine Daten übermittelt werden (Schritt 211). Ebenfalls wird davon ausgegangen, daß weder eine Testanforderung (Schritt 212) noch ein Registerabruf (Schritt 214) veranlaßt wurde, um das Restguthaben zu prüfen. Dann aber wird der Frankiermodus 400 erreicht.

In einer anderen Variante werden die für die Übermittlung der für eine Guthabennachladung erforderlichen Daten relevanten Schlüssel (Krypto-Keys), welche im Speicher in kryptifizierter Form abgelegt worden sind, ebenfalls völlständig gelöscht, wenn ein unautorisierter Eingriff in die Frankiermaschine erfolgt. Wie bereits in Zusammenhang mit der Figur 7 erläutert wurde, kann nach einem Öffnungsersuchen die Öffnungsbefugnis erlangt werden, indem ein neues Codewort Y' nachgeladen wird. In der Figur 7 wird ein entsprechender Ablaufplan zur Codeworteinbringung dargestellt.

Eine weitere Möglichkeit zur Realisierung des Kill-Modus ist das teilweise Löschen der Postregisterstände, welche redundant gespeichert vorliegen. Dabei wird zielgerichtet in vorbestimmter Weise die Redundanz verringert. Dieses Verringern der Redundanz soll sich unterscheiden von anderen Datenfehlern, die von der Frankiermaschine selbsttätig behoben werden können, wie das in der anhängigen europäischen Anmeldung mit dem amtlichen Aktenzeichen 93 103 951.5 näher ausgeführt wird. Dort wird ein Verfahren zur Speicherkorrektur sicherheitsrelevanter Daten in einer Frankiermaschine vorgeschlagen, wobei redundant abgespeicherte Daten untereinander verglichen werden, um einen Speicherbereich mit fehlerhaften Daten wieder mit fehlerfreien Daten zu laden. Das ist aber bei einem sechsten Fehlertyp nicht mehr möglich, weil alle redundant gespeicherten Daten nun unterschiedliche Fehler haben, welche nicht mehr automatisch korrigiert werden können. Nur ein Servicetechniker könnte die Daten nach einer vorbestimmten Weise rekonstruieren, was dann nach jedem autorisiertem Öffnen vor erneuter Inbetriebnahme der Frankiermaschine zu geschehen hat.

Die Frankiermaschinen-Hardware ist außerdem in bekannter Weise durch eine verschließbare Klappe zugänglich, welche über einen Sicherheitsschlüssel geöffnet werden muß. Eine weitere Schwelle für eine Manipulation ist das zuvor zu erbrechende Siegel bzw. die zu überwindende Siegel-Nummer, welche außerhalb der Frankiermaschine in der Datenzentrale ebenfalls gespeichert vorliegt. Die Datenzentrale gibt eine Feedback-Information an das Postamt bzw. den Inspektor aus, der das Siegel vor Ort visuell kontrolliert und mit der angezeigten intern gespeicherten Siegel-Nummer vergleicht.

Die Sicherheit setzt bei der autorisierten Öffnung voraus, die Zuverlässigkeit der berechtigten Person (Service, Inspektor) und die Möglichkeit deren Anwesenheit zu überprüfen. Die Kontrolle des Siegels und die Kontrolle der Registerstände bei einer Inspektion der Frankiermaschine und unabhängig davon der Daten in der Datenzentrale ergibt dann die Überprüfungssicherheit. Die Kontrolle der frankierten Postgüter unter Einbeziehung eines Sicherheitsabdruckes liefert eine zusätzliche Überprüfungssicherheit.

Die Frankiermaschine führt regelmäßig und/oder beim Einschalten den Registercheck durch und kann somit die fehlende Information erkennen, falls die Maschine unautorisiert geöffnet worden war. Die Frankiermaschine wird dann blockiert. Ohne die Erfindung in Verbindung mit einem Codewort Y würde der Manipulator die Blockierung leicht überwinden. So geht aber das Codewort verloren und es würde dem Manipulator zuviel Zeit und Aufwand kosten, das gültige Codewort durch Versuche zu ermitteln. In der Zwischenzeit wäre die Frankiermaschine längst in der Datenzentrale als suspekt registriert.

Der potentielle Manipulator einer Frankiermaschine muß mehrere Schwellen überwinden, was natürlich einen gewissen Zeitaufwand bedarf. Erfolgt in gewissen Zeitabständen keine Verbindungsaufnahme von der Frankiermaschine zur Datenzentrale, wird die Frankiermaschine bereits suspekt. Es ist dabei davon auszugehen, daß derjenige, der eine Manipulation an der Frankiermaschine begeht, sich kaum wieder bei der Datenzentrale melden wird.

Ein potentieller Betrüger, der aus oben genannten Gründen nicht an die gespeicherten Daten gelangt, wird zusätzlich auch an einer Manipulation des Drucksteuersignals zum Druckkopf gehindert. Er könnte versucht sein, beim spaltenweisen Druck manipulierte variable Pixelbilddaten in das Drucksteuersignal einzuschleusen. Die Frankiermaschine wird gewöhnlich mit hoher bis maximaler Druckgeschwindigkeit betrieben. Bei einer Manipulation des Drucksteuersignals für den Druckkopf ergibt sich ein geänderter Zeitablauf, der nur bei geringerer Druckgeschwindigkeit vergleichbar simuliert werden könnte.

Der Druckkopf ist in der Frankiermaschine derart angeordnet, daß er nicht ohne Transportvorrichtung benutzt werden kann, um einen unabgerechneten Frankierstempel zu erzeugen. Eine solche Anordnung ist beispielsweise aus der US 4.705.417 ersichtlich. Jedoch sind auch andere Anordnungen mit Druckköpfen, welche auf einem anderen Druckprinzip beruhen denkbar, welche ohne die Transportvorrrichtung nicht benutzt werden können.

Da der Druckkopf ohne Transportvorrichtung nicht benutzt werden kann, um einen unabgerechneten Frankierstempel zu erzeugen, wird die Transportgeschwindigkeit bzw. die Druckgeschwindigkeit überwacht. Wird ein Thermotransferdrucker eingesetzt, genügt es die Bandgeschwindigkeit des Farbbandes, welche bereits über einen Encoder gemessen wird, auszuwerten. Die Encoderimpulse werden innerhalb eines Zeitfensters gezählt, welches vom Uhren/Datums-Baustein 8 geliefert oder aus dem Systemtakt der Steuereinrichtung 6 abgeleitet wird. Der Systemtakt wird mittels eines - in den Figuren 1a und 1b nicht gezeigten - quarzgesteuerten Taktgebers erzeugt. Weicht die Anzahl an Encoder-Impulsen von einer Sollanzahl ab, wird der Motor 12 entsprechend nachgesteuert. Ist die Soll/Ist-Abweichung über ein zulässiges Maß hinaus angestiegen, liegt ein Fehler vor. Dieser Fehler wird protokolliert und führt gegebenenfalls zum Außerbetriebsetzen der Frankiermaschine.

Im Schritt 202 des - in der Figur 2a dargestellten - Ablaufplanes kann dann überprüft werden, ob die Druckgeschwindigkeit eingehalten wird bzw. ob diese vom zulässigen Wert abweicht. Ist dieses Kriterium erfüllt, erfolgt eine entsprechende Warnung in der Anzeige, welche bei Nichtbeachtung letztlich zur Blokkierung der Frankiermaschine führt.

Eine andere Variante überprüft den Zeitablauf beim spaltenweisen Druck, durch Vergleich der Zeitdauer für den Druck der einzelnen Spalten, in welchen variable Daten vorkommen. Insbesondere kann die Anzahl von Taktimpulsen des quarzgesteuerten Taktgebers zwischen den einzelnen Encoderimpulsen gezählt werden. In einem Schritt 207 kann dann überprüft werden, ob der Zeitablauf eingehalten wurde bzw. ob er vom zulässigen Zeitablauf abweicht. Ist dieses Kriterium erfüllt, erfolgt in einem weiteren Schritt 208 eine Maßnahme zur Blockierung der Frankiermaschine. Die Druckgeschwindigkeit wird durch die erforderliche Systemroutine bzw. Zeitdauer zur Sicherung der Frankiermaschine im Betriebsmodus kaum herabgesetzt.

Durch Erschließung aller Zeitreserven während des Druckes, durch den Mikroprozessor der Steuereinrichtung, der die spaltenweise Einbettung von Fensterdaten durchführt, bleibt kaum noch Raum bzw. Zeit für eine Manipulation. Das Verfahren ist jedoch nicht auf derartige schnelle Frankiermaschinen beschränkt. Entscheidend ist die Überwachung der Druckgeschwindigkeit auf eventuell durch Manipulationen hervorgerufene Abweichungen im Zeitablauf, um neben den anderen bereits getroffenen Sicherheitsmaßnahmen außerdem eine Manipulation des Drucksteuersignals zu verhindern.

Die Steuereinrichtung 6 weist einen Mikroprozessor oder einen OTP auf. Im OTP sind neben einem Mikroprozessor auch nichtflüchtige Speicher und weitere Schaltungen in einem gemeinsamen Gehäuse untergebracht. Der interne nichtflüchtige Speicher umfaßt beispielsweise Programmspeicher und andere Datenspeicher, insbesondere auch die Möglichkeit Sicherungsbits zu setzen, die das Auslesen des internen nichtflüchtigen Speichers von außen verhindern. Diese Sicherungsbits werden während der Herstellung der Frankiermaschine im OTP gesetzt. Das Observieren solcher sicherheitsrelevanter Routinen, wie beispielsweise Abrechnungsroutinen, mit einem Emulator/Debugger würde ebenfalls zu einem veränderten Zeitablauf führen, was durch den OTP feststellbar ist. Dieser umfaßt auch eine Taktgeber/Zähler-Schaltung für die Vorgabe von Zeitintervallen bzw. Taktzyklen beispielsweise für die Time-out-Generierung oder Druckersteuerung. Wenn eine bestimmte Zeit abgelaufen ist und das erwartete Ereignis nicht eingetreten ist, wird vom der Taktgeber/Zähler-Schaltung ein Interrupt generiert, der dem Mikroprozessor den ergebnislosen Ablauf der Zeitspanne meldet, woraufhin der Mikroprozessor weitere Maßnahmen veranlaßt. Es wird die Taktgeber/Zähler-Schaltung für eine Programmlaufzeitüberwachung eingesetzt. Dabei wird von einer bekannten Anzahl von Taktzyklen für den Programmablauf von vorbestimmten Programmteilen ausgegangen. Vor dem Start der Routine wird der Zähler der Taktgeber/Zähler-Schaltung in vorbestimmter Weise voreingestellt bzw. zurückgesetzt. Nach dem Start der Programmroutine wird entsprechend den Taktimpulsen des Taktgebers der Zählerstand laufend verändert. Nach Abarbeitung der kritischen vorbestimmten Programmteile wird der Zustand des Zählers vom Mikroprozessor abgefragt und mit dem erwarteten Wert verglichen.

Bei vorbestimmter Abweichung in der Laufzeit kritischer bzw. sicherheitsrelevanter Programmteile, wird ein Flag in einem Speicher gesetzt, welches im Schritt 207 abgefragt wird. Bei Vorliegen dieses Abfragekriteriums wird auf den Schritt 208 verzweigt. Die Frankiermaschine kann somit nicht weiter zum Frankieren betrieben werden (Kill Mode 1).

Bei einer vorteilhaften weiteren Variante der Zeitkontrolle wird das Codewort Y im SRAM 24 über die Steuerleitung C gelöscht. Das kann in Verbindung mit der Adressenleitung A und der Datenleitung D durch Überschreiben mit einem vorbestimmten anderen Wort, beispielsweise 0000 erfolgen. Der Vorteil liegt insbesondere darin, daß selbst ohne einen Sensor 21 bzw. wenn aus irgendwelchen Gründen der Sensor 21 wirkungslos war, die Detektoreinrichtung 20 noch auf eine Manipulation reagiert, welcher natürlich ein unbefugtes Öffnen vorausgegangen sein muß.

Andere Varianten bzw. eine Kombination mit anderen Varianten, wie beispielsweise das Löschen eines Teils des DES-Schlüssel oder der redundanten Registerstände bzw. Löschen anderer Daten oder Schlüssel, welche für die Datenzentrale bei einer Transaktion Bedeutung haben, sind durch den Erfindungsgedanken eingeschlossen. Dabei ist wesentlich, daß kritische Programmteile im OTP gespeichert vorliegen und die Programmlaufzeitüberwachungsmittel software- und/oder hardwaremäßige Bestandteile des OTP sind. Damit können mit diesen Programmteilen die extern vom OTP im Programmspeicher PSP 11 gespeicherten kritischen Programme überwacht werden. Der Vorteil besteht darin, daß das Überwachungsprogramm selbst nicht observiert oder manipuiert werden kann, da es ständig im OTP verbleibt und auch nicht ausgelesen werden kann. In Kombination mit dem Sensor 21 wird somit eine höhere Sicherheit erreicht.

In einer abgerüsteten Variante wird der Sensor 21 eingespart, weil das Gehäuse anderweitig ausreichend gesichert ist und die Überwachungsfunktion in vorgenannter Weise durch die in Verbindung mit einer entsprechenden Software wirksame Detektoreinrichtung 20 übernommen wird. Die Detektoreinrichtung 20 kann - in einer in der Figur 1b nicht dargestellten Variante - auch Bestandteil des Prozessors (OTP) sein. Diese Einrichtung 20 ist dabei vorzugsweise als ein von extern nicht auslesbarer nichtflüchtiger Speicher ausgebildet. Ein geeigneter Prozessortyp ist beispielsweise der TMS 370 C010 von Texas Instruments, welcher einen 256 Bytes $E^2$PROM aufweist. Nimmt ein Manipulator einen unautorisierten Eingriff vor, wird die Frankiermaschine durch das Überführen in den ersten Modus wirksam außer Betrieb gesetzt.

Bei einer Inspektion werden zunächst das Siegel der Frankiermaschine auf Unversehrtheit und dann die Registerstände überprüft. Bei Bedarf kann ein Probeabdruck mit dem Wert 0 gemacht werden. Bei einer Reparatur durch den Service vor Ort muß eventuell in die Frankiermaschine eingegriffen werden. Die Fehlerregister sind beispielsweise mit Hilfe eines speziellen Service-EPROM auslesbar, welches an die Stelle des Advert-EPROM gesteckt wird. Wenn auf diesen EPROM-Steckplatz vom Prozessor nicht zugegriffen wird, wird gewöhnlich ein Zugriff auf die Datenleitungen durch spezielle - in den Figuren 1a und 1b nicht dargestellte - Treiberschaltkreise verhindert. Die Datenleitungen, welche hier durch eine versiegelte Gehäusetür erreichbar sind, können somit nicht unbefugt kontaktiert werden. Eine andere Variante ist das Auslesen von Fehlerregisterdaten durch einen über eine Schnittstelle angeschlossenen Service-Computer. Zur Vorbereitung des Eingriffs werden die Register der Frankiermaschine abgefragt, um die Art des erforderlichen Eingriffs zu ermitteln. Bevor in die Frankiermaschine eingegriffen und das Gehäuse geöffnet wird, erfolgt ein separater Anruf bei der Datenzentrale. Wird dannach innerhalb einer vorbestimmten Zeitdauer der Vorgabewert auf Null geändert und zur Datenzentrale im Rahmen einer Transaktion übermittelt, d.h. die Art des Eingriffs und die Registerdaten wurden der Datenzentrale mitgeteilt, erfolgt ein Übermitteln von Daten von einer Datenzentrale zur Frankiermaschine entsprechend einem beantragten autorisierten Eingriff in die Frankiermaschine, welcher als erlaubter Eingriff protokolliert wird.

Wird innerhalb einer vorbestimmten Zeitdauer aber der Vorgabewert auf einen Wert verschieden von Null geändert und zur Datenzentrale im Rahmen einer Transaktion übermittelt, bleibt ein zuvor erfolgter separater Anruf zur Datenzentrale folgenlos, d.h. ein Öffnungsgesuch gilt als nicht gestellt und eine Befugnis zum autorisierten Eingriff (Öffnungsbefugnis) in die Frankiermaschine wird nicht erteilt und folglich kein neues Codewort Y'übermittelt.

Die Frankiermaschine ist fähig, zu unterscheiden zwischen beantragten autorisierten und unautorisierten Eingriff in die Frankiermaschine mittels der Steuereinheit der Frankiermaschine in Verbindung mit den von der Datenzentrale übermittelten Daten,wobei bei unautorisierten Eingriff in die Frankiermaschine dieser Eingriff als Fehlerfall protokolliert wird, aber nach erfolgten autorisierten Eingriff in die Frankiermaschine der ursprüngliche Betriebszustand mittels den vorgenannten übermittelten Daten wiederhergestellt wird.

Es ist außerdem auch in Zeiten in welchen nicht gedruckt wird (Standby Modus) vorgesehen, daß eine Abfrage hinsichtlich Manipulationsversuchen erfolgt und/oder die Checksumme der Registerstände und/oder über den Inhalt des Programmspeichers PSP 11 gebildet wird. Zur Verbesserung der Manipulationssicherheit wird dabei für einen Kill-Mode 2 die Checksumme im OTP über den Inhalt des externen Programmspeichers PSP 11 gebildet und das Ergebnis mit einem im OTP gespeicherten vorbestimmten Wert verglichen. Dies erfolgt vorzugsweise im Schritt 101, wenn die Frankiermaschine gestartet wird, oder im Schritt 213, wenn die Frankiermaschine im Standby-Modus betrieben wird. Der Standby-Modus wird erreicht, wenn eine vorbestimmte Zeit keine Eingabe- bzw. Druckanforderung erfolgt. Letzteres ist der Fall, wenn ein ansich bekannter - nicht näher dargestellter - Briefsensor keinen nächsten Briefumschlag ermittelt, welcher frankiert werden soll. Der - in der Figur 4b gezeigte - Schritt 405 im Frankiermodus 400 umfaßt daher noch eine weitere Abfrage nach einem Zeitablauf oder nach der Anzahl an Durchläufen durch die Programmschleife, welche letztendlich wieder auf die Eingaberoutine gemäß Schritt 401 führt. Wird das Abfragekriterium erfüllt, wird im Schritt 408 ein Standby-Flag gesetzt und direkt auf den Punkt s zur Systemroutine 200 zurückverzweigt, ohne daß die Abrechnungs- und Druckroutine im Schritt 406 durchlaufen wird. Das Standby-Flag wird später im Schritt 211 abgefragt und nach der Checksummenprüfung im Schritt 213 zurückgesetzt, falls kein Manipulationsversuch erkannt wird.

Das Abfragekriterium in Schritt 211 wird dazu um die Frage erweitert, ob das Standby-Flag gesetzt ist, d.h. ob der Standby Modus erreicht ist. In diesem Fall wird ebenfalls auf den Schritt 213 verzweigt. Eine bevorzugte Variante besteht darin, in bereits beschriebenen Weise das Codewort Y zu löschen, wenn ein Manipulationsversuch im Standby Modus auf vorgenannte Weise im Schritt 213 festgestellt worden ist. Das Fehlen des Codewortes Y wird im Schritt 207 erkannt und dann auf den Schritt 208 verzweigt. Der Vorteil dieses Verfahrens in Verbindung mit dem ersten Modus besteht darin, daß der Manipulationsversuch statistisch im Schritt 213 erfaßt wird.

Um die Sicherheit gegenüber Manipulationen weiter zu erhöhen wird erfindungsgemäß eine Flußkontrolle (Flow Control) eingesetzt, welche nachfolgend erläutert wird. Eine solche Flow Control erfolgt durch Verändern eines Zählwertes in einem Speicher an mindestens einem Punkt während der Ausführung der Programmroutine. Nach Ausführung der Programmroutine wird der veränderte Zählwert mit einem dieser Programmroutine zugeordneten vorbestimmten Zählwert verglichen. Werden nun während der Programmausführung Verzweigungen durchlaufen, so können sich unterschiedliche Zählwerte ergeben. In einer nachfolgenden Auswertung wird ein Plausibilitätstest durchgeführt bzw. es kann festgestellt werden, welche Verzweigungen durchlaufen wurden. Das ist dadurch möglich, da die Veränderung des Zählwertes durch eine Multiplikation mit einer bestimmten dem jeweiligen Programmteil zugeordneten Primzahl erfolgt. Bei einer späteren Auswertung muß dann lediglich eine Primzahlzerlegung durchgeführt werden.

In einer anderen Variante, wo nur solche Programmteile ohne Verzweigungen berücksichtigt werden bzw. keine Rückverfolgung der durchlaufenen Programmzweige erforderlich wird, ist ein Inkrementieren des Zählwertes und abschließender Vergleich mit mindestens einem vorbestimmten Zahlwert ausreichend.

Die Erläuterung der Abläufe nach dem - in der Figur 4a gezeigten - Frankiermodus erfolgt in Verbindung mit dem - in der Figur 1a dargestellten - Blockschaltbild.

Nach dem Einschalten werden automatisch der Postwert im Wertabdruck entsprechend der letzten Eingabe vor dem Ausschalten der Frankiermaschine und das Datum im Tagesstempel entsprechend dem aktuellem Datum vorgegeben und für den Abdruck die variablen Daten in die festen Daten für den Rahmen und für alle unverändert bleibenden zugehörigen Daten elektronisch eingebettet. Diese variablen Daten der Fensterinhalte werden nachfolgend kurz als Fensterdaten und alle festen Daten für den Wertstempel, den Tagesstempel und den Werbeklischeestempel als Rahmendaten bezeichnet. Die Rahmendaten sind einem ersten Speicherbereich eines Nurlesespeichers (ROM), welcher zugleich als Programmspeicher 11 dient, entnehmbar. Die Fensterdaten werden einem zweiten Speicherbereich entnommen und entsprechen der Eingabe in Speicherbereichen $B_j$ des nichtflüchtigen Arbeitsspeichers 5 gespeichert. Sie sind diesem jederzeit zwecks eines Zusammensetzens zu einer Gesamtdarstellung eines Frankierbildes entnehmbar. Dabei ist vorgesehen, die hexadezimalen Fensterdaten in lauflängencodierter Form in die jeweils getrennten Speicherbereiche $B_1$ bis $B_4$ des nichtflüchtigen Arbeitsspeichers 5 zu übertragen und dort abzuspeichern. Außerdem läuft die Zeit im Uhren/Datums-Baustein ständig auch bei ausgeschalteter Frankiermaschine weiter. Wird also der Schritt 401 im Frankiermodus 400 erreicht, kann nach dem Einschalten der Frankiermaschine auch ohne Eingabe auf bereits gespeicherte Daten zurückgegriffen werden. Diese Einstellung betrifft insbesondere die letzte Einstellung der Frankiermaschine hinsichtlich des Portowertes, welche im Schritt 402 angezeigt wird, bevor im Schritt 403 die Druckdatenaufbereitung erfolgt. Hierbei werden die aktuellen variablen Pixelbilddaten (Datum und Portowert) in die festen Rahmenpixelbilddaten eingebettet. Anschließend erfolgt im Schritt 404 eine Abfrage der Eingabemittel auf eventuelle weitere Eingaben.

Die Daten werden aus beiden Speicherbereichen entsprechend einer vorbestimmten Zuordnung vor dem Druck zu einem Pixeldruckbild zusammengesetzt. Die variable Information im dafür vorgesehenen Fenster können nachträglich ergänzt und modifiziert werden. Um Zeit einzusparen, werden nur die Teile einer graphischen Darstellung bei einer Änderung neu im nichtflüchtigen Arbeitsspeicher eingespeichert, die tatsächlich geändert werden. Im Programmspeicher 11 liegt ein erster Speicherbereich A (u.a. für die Daten der konstanten Teile des Frankierbildes u.a. den Werbeklischee-Rahmen) vor. Die Subspeicherbereiche $A_i$ sind für i = 1 bis m Rahmen- oder Fixdaten vorgesehen, wobei ein zugeordneter Index i den jeweiligen Rahmen kennzeichnet, welcher vorzugsweise einer bestimmten Kostenstelle zugeordnet ist. Die entsprechende Zuordnung der jeweiligen Kostenstelle zu den Rahmendaten wird nach dem Einschalten automatisch abgefragt. In einer anderen Variante muß nach jedem Einschalten während der Startroutine die Kostenstelle erneut in den Speicherbereich C eingegeben werden, während sie bei kurzzeitigen Betriebsspannungsunterbrechungen erhalten bleibt.

Im Charakterspeicher 9 sind alle alphanumerischen Zeichen bzw. Symbole pixelweise als binäre Daten abgelegt. Daten für alphanumerische Zeichen bzw. Symbole sind im nichtflüchtigen Arbeitsspeicher 5 komprimiert in Form einer Hexadezimalzahl abgespeichert. Sobald die Nummer der Kostenstelle eingegeben im Speicherbereich C gespeichert vorliegt, werden die komprimierten Daten aus dem Programmspeicher 11 mit Hilfe des Charakterspeichers 9 in ein binäre Pixeldaten aufweisendes Druckbild umgewandelt, welches in solcher dekomprimierten Form im flüchtigen Arbeitsspeicher 7 gespeichert wird (Schritt 403). Zur Erläuterung werden nachfolgend Arbeitsspeicher 7a, 7b und Pixelspeicher 7c verwendet, obwohl es sich hierbei physikalisch vorzugsweise um einen einzigen Speicherbaustein handelt.

Die Speicherbereiche im nichtflüchtigem Arbeitsspeicher 5 können eine Vielzahl von Subspeicherbereichen enthalten, unter welchen die jeweiligen Daten in Datensätze gespeichert vorliegen. Die Subspeicherbereiche $B_j$ sind für j = 1 bis n Fensterdaten vorgesehen, wobei verschiedene Zuordnungen zwischen den Subspeicherbereichen der verschiedenen Speicherbereiche vorbestimmt gespeichert sind.

In einem jeden Datensatz eines Subspeicherbereiches $A_i$, $B_j$ sind abwechselnd nacheinander Steuercode und lauflängencodierte Rahmen- bzw. Fensterdaten enthalten. Vor dem Druck werden im Schritt 403 aus dem nichtflüchtigen Programmspeicher (PSP) 11 die jeweiligen ausgewählten festen Daten in die Register 100, 110, 120, ..., eines flüchtigen Arbeitsspeichers 7a übernommen, wobei während der Übernahme Steuercode dekodiert und in einem gesonderten Speicherbereich des Arbeitsspeichers 7b gespeichert werden. Ebenso werden die jeweiligen ausgewählten Fensterdaten für den Poststempel und den Portostempel in Register 200, 210, 220, ..., geladen. Vorzugsweise werden die Register von Subspeicherbereichen im Speicherbereich des Arbeitsspeichers 7a gebildet. In einer anderen Variante sind diese vorgenannten Register Bestandteil der Mikroprozessorsteuerung 6. Durch Dekomprimieren werden die lauflängencodierter hexadezimalen Daten in entsprechende binäre Pixeldaten überführt.

Die einmal aufgerufenen konstanten Teile des Frankierbildes stehen im Pixelspeicherbereich I im flüchtigen Pixelspeicher 7c ständig dekodiert zur Verfügung. Für eine schnelle Änderung der Fensterdaten, existiert ein zweiter Speicherbereich B im nichtflüchtigen Arbeitsspeicher 5.

Die Zahlenketten (sTrings), die für die Erzeugung der Eingabedaten mit einer Tastatur 2 oder aber über eine an die Ein/Ausgabeeinrichtung 4 angeschlossene, den Portowert errechnende, elektronische Waage 22 eingegeben werden, werden automatisch im Speicherbereich D des nichtflüchtigen Arbeitsspeichers 5 gespeichert. Außerdem bleiben auch Datensätze der Subspeicherbereiche, zum Beispiel $B_j$, C usw., erhalten. Damit ist gesichert, daß die letzten Eingabegrößen auch beim Ausschalten der Frankiermaschine erhalten bleiben, so daß nach dem Einschalten automatisch der Portowert im Wertabdruck entsprechend der letzten Eingabe vor dem Ausschalten der Frankiermaschine und das Datum im Tagesstempel entsprechend dem aktuellem Datum vorgegeben wird. Ist eine Waage 22 angeschlossen, wird der Portowert aus dem Speicherbereich D entnommen. Im Schritt 404 wird gewartet, bis ein solcher aktuell gespeichert vorliegt. Bei einer erneuten Eingabeanforderung im Schritt 404 wird wieder auf den Schritt 401 zurückverzweigt. Anderenfalls wird auf den Schritt 405 verzweigt, um die Druckausgabeanforderung abzuwarten. Durch einen Briefsensor wird der zu frankierende Brief detektiert und damit eine Druckanforderung ausgelöst. Somit kann auf die Abrechnungs- und Druckroutine im Schritt 406 verzweigt werden. Liegt keine Druckausgabeanforderung (Schritt 405) vor, wird zum Schritt 401 (Punkt d) oder - nach einer in der Figur 4b gezeigten Variante - zum Schritt 301 (Punkt e) zurückverzweigt.

Wenn nach der - in der Figur 4b dargestellten - anderen Variante statt zum Punkt d nunmehr zum Punkt e zurückverzweigt und der Schritt 301 erreicht wird, kann jederzeit ein Kommunikationsersuchen gestellt oder eine andere Eingabe gemäß den Schritten Testanforderung 212, Registercheck 214, Eingaberoutine 401 getätigt werden. Es werden weitere Schritte 401 bis 404, wie bei der Variante nach Figur 4a, durchlaufen. Ein weiteres Abfragekriterium kann im anschließenden Schritt 405 abgefragt werden, um im Schritt 408 ein Standby-Flag zu setzen, wenn nach einer vorbestimmten Zeit noch keine Druckausgabeanforderung vorliegt. Wie bereits oben erläutert, kann das Standby-Flag im auf den Kommunikationsmodus 300 folgenden Schritt 211 abgefragt werden. Damit wird nicht auf den Frankiermodus 400 verzweigt, bevor nicht die Checksummenprüfung die Vollzähligkeit aller oder mindestens ausgewählter Programme ergeben hat.

Falls eine Druckausgabeanforderung im Schritt 405 erkannt wird, werden weitere Abfragen in den nachfolgenden optionalen Schritten 409 und 410 sowie im Schritt 406 getätigt. Beispielsweise werden im Schritt 409 das Vorhandensein eines im Schritt 208 (Fig.2b) gesetzten Kill-Mode-Flag's, im Schritt 410 das Erreichen eines weiteren Stückzahlkriterium und/oder im Schritt 406 die in bekannten Weise zur Abrechnung eingezogenen Registerdaten abgefragt. War die zum Frankieren vorbestimmte Stückzahl bei der vorhergehenden Frankierung verbraucht, d.h. Stückzahl gleich Null, wird automatisch zum Punkt e verzweigt, um in den Kommunikationsmodus 300 einzutreten, damit von der Datenzentrale eine neue vorbestimmte Stückzahl S wieder kreditiert wird. War jedoch die vorbestimmte Stückzahl noch nicht verbraucht, wird vom Schritt 410 auf die Abrechnungs- und Druckroutine im Schritt 406 verzweigt.

Die Anzahl von gedruckten Briefen, und die aktuellen Werte in den Postregistern werden entsprechend der eingegebenen Kostenstelle im nichtflüchtigen Speicher 10 der Frankiermaschine in einer Abrechnungsroutine 406 registriert und stehen für eine spätere Auswertung zur Verfügung. Ein spezieller Sleeping-Mode-Zähler wird während der unmittelbar vor dem Druck erfolgenden Abrechnungsroutine veranlaßt, einen Zählschritt weiterzuzählen.

Die Registerwerte können bei Bedarf im Anzeigemodus 215 abgefragt werden. Es ist ebenfalls vorgesehen, die Registerwerte mit dem Druckkopf der Frankiermaschine zu Abrechnungszwecken auszudrukken. Das kann beispielsweise ebenso erfolgen, wie das bereits in der deutschen Offenlegungsschrift P 42 24 955 A1 näher ausgeführt wird.

Es ist bei einer anderen Variante weiterhin vorgesehen, daß auch variable Pixelbilddaten während des Druckens in die übrigen Pixelbilddaten eingebettet werden. Entsprechend der vom Encoder 13 gelieferten Positionsmeldung über den Vorschub der Postgutes bzw. Papierstreifens in Relation zum Druckermodul 1 werden die komprimierten Daten aus dem Arbeitsspeicher 5 gelesen und mit Hilfe des Charakterspeichers 9 in ein binäre Pixeldaten aufweisendes Druckbild umgewandelt, welches ebenfalls in solcher dekomprimierten Form im flüchtigen Arbeitsspeicher 7 gespeichert wird. Nähere Ausführungen sind den europäischen Anmeldungen EP 576 113 A2 und EP 578 042 A2 entnehmbar.

Der Pixelspeicherbereich im Pixel-Speicher 7c ist also für die ausgewählten dekomprimierten Daten der festen Teile des Frankierbildes und für die ausgewählten dekomprimierten Daten der variablen Teile des Frankierbildes vorgesehen. Nach der Abrechnung erfolgt die eigentliche Druckroutine (im Schritt 406).

Wie aus den Figuren 1a und 1b hervorgeht, stehen der Arbeitsspeicher 7b und der Pixelspeicher 7c mit dem Druckermodul 1 über eine ein Druckregister (DR) 15 und eine Ausgabelogik aufweisende Druckersteuerung 14 in Verbindung. Der Pixelspeicher 7c ist ausgangsseitig an einen ersten Eingang der Druckersteuerung 14 geschaltet, an deren weiteren Steuereingängen Ausgangssignale der Mikroprozessorsteuereinrichtung 6 anliegen.

Sind alle Spalten eines Druckbildes gedruckt worden, wird wieder zur Systemroutine 200 zurückverzweigt.

Der in der Figur 2a dargestellte Ablaufplan für ein Sicherheitssystem weist Schritte 201 bis 206 für eine Überwachung weiterer Kriterien auf. Bei einer Verletzung eines der Sicherheitskriterien tritt die Frankiermaschine in einen Sleeping-Modus ein, beispielsweise, wenn nach Verbrauch einer vorbestimmten Stückzahl noch keine Verbindung zur Datenzentrale aufgenommen wurde. Anhand der Figur 5 wird ein Detail des Ablaufplanes für eine erste Sleeping-Mode-Variante erläutert. Von der Systemroutine 200 ausgehend tritt die Frankiermaschine in einen Schritt 201 ein, in welchem aktuelle Daten S und $S_{ref}$ aufgerufen werden. Die Frankiermaschine enthält einen fest gespeicherten Stückzahlvergleichswert $S_{ref}$. In Übereinstimmung mit der Höhe des gerade während einer Kommunikation nachgeladenen Guthabens wurde u.a. intern eine Sleepingmodestückzahl S errechnet, welche nachfolgend bei jeder Frankierung dekrementiert wird. Dies wird fortgesetzt, bis der Stückzahlvergleichswert $S_{ref}$ erreicht ist. Wird ein solches im Schritt 202 festgestellt, erfolgt im Schritt 203 eine Warnung, beispielsweise "TELESET", um den Benutzer der Frankiermaschine zu einer Kommunikation mit der Datenzentrale aufzufordern. Durch diese Anzeige ergibt sich eine Verzögerung $t_n$ im Betriebsablauf der Frankiermaschine. Im nachfolgenden Schritt 204 wird die Verzögerung für eine nächste Anzeige mit der Zeitdauer $t_k$ inkrementiert aber der Stückzahlvergleichswert um den Wert n dekrementiert, bevor auf den Schritt 207 verzweigt wird. Damit ist sichergestellt, daß die Aufforderung die Kommunikation mit der Datenzentrale herzustellen immer dringlicher wird, weil die Frankiermaschine immer länger im Schritt 203 verweilt. Wurde jedoch eine Kommunikation 300 durchgeführt, wurden Daten übermittelt (Schritt 211) und im Bereich G des nichtflüchtigen Speichers 5 der Frankiermaschine während des Statistik- und Fehlerauswertemodus gespeichert.

Die Frankiermaschine und die Datenzentrale verabreden jeweils eine vorbestimmte Stückzahl S, d.h. die Menge, die bis zur nächsten Verbindungsaufnahme frankiert werden kann. Falls eine Kommunikation nicht zustande kommt (Stückzahlkontrolle), verlangsamt die Frankiermaschine ihre Arbeitsweise (Sleeping Modus-Variante 1). Als aktuelle Daten werden im Schritt 201 somit die zurückgesetzten Größen $t_n$ bzw. Werte S und $S_{ref}$ aufgerufen. Wird in der Datenzentrale ermittelt, welche Stückzahl bis zur nächsten Verbindungsaufnahme frankiert werden soll, müssen gespeicherte historische Daten über das Guthabennachlade- bzw. Frankierverhalten (Stückzahl von Postgütern mit Durchschnitts-Porto) herangezogen werden. Die Übermittlung einer neuen Stückzahl S' kann dann auf die gleiche Art und Weise erfolgen, wie das im Zusammenhang mit der Übermittlung des neuen Codewortes Y' bereits erläutert wurde. Bei einer Kommunikation gemäß Figuren 3a und 3b wird dann eine neue vorbestimmte Stückzahl S' übermittelt und als Stückzahl S bei laufender Frankierung dekrementiert. Aus der neuen vorbestimmten Stückzahl S' wird intern die Vergleichsstückzahl $S_{ref}$ errechnet (Schritt 213).

In der Figur 6 ist der modifizierte Ablaufplan für eine zweite Sleeping-Modus-Variante gezeigt. Die Schritte 100 bis 105 sowie 210 sind nicht mit dargestellt worden. Nach dem Aufruf der übermittelten aktuellen Daten im Schritt 201, wird im Schritt 202 die zu dekrementierende Stückzahl S mit einer Vergleichsstückzahl verglichen. Die Vergleichsstückzahl ermittelt sich aus der Division einer maximalen Stückzahl $S_{max}$ durch eine Zahl k. Ist das Kriterium erfüllt, wird wieder auf einen Schritt 203, welcher die Warnung, beispielsweise "CALL FP" kurzzeitig anzeigt. Anschließend wird im Schritt 204 die neue maximale Stückzahl $S_{max}$ über eine Division mit einer weiteren Zahl m gebildet, welche für den nächsten Vergleich im Schritt 202 erforderlich sein würde, falls keine Kommunikation mit der Datenzentrale bzw. keine Guthabennachladung erfolgt. Damit kann bis zur nächsten Stückzahlgrenze ohne Anzeige einer Warnung weiter gearbeitet werden. Jedoch ist es möglich in immer kürzeren Abständen, d.h. nach einer vorbestimmten Anzahl an Frankierungen, eine erneute Warnung auszugeben, welche so immer dringlicher auf das Erfordernis einer Kommunikation mit der Datenzentrale aufmerksam macht. Das Frankieren wird nicht beeinträchtigt. Solange die Überprüfung im Schritt 205 ergibt, daß die Stückzahl S noch größer Null ist, wird der Schritt 207 erreicht. Lediglich die Warnung erscheint immer öfter in der Anzeige. Anderenfalls wird auf den Schritt 206 verzweigt, wobei beispielsweise ein FLAG gesetzt wird, welches später im Schritt 301 abgefragt und als Kommunikationsersuchen gewertet wird. Im Schritt 206 kann ebenfalls eine zusätzliche Anzeige erfolgen, daß nun automatisch die Kommunikation erfolgt und solange die Frankierfunktion ruht, bis die Kommunikation erfolgreich abgeschlossen ist. Natürlich kann jederzeit der Frankiermaschinenbenutzer schon vorher den Kommunikationsmodus aufrufen.

Eine andere Variante kommt ohne den in der Figur 6 gezeigten Schritt 204 aus. Es wird eine ständige Warnung für ein bevorstehendes Schlafenlegen der Frankierfunktion im Schritt 203 ausgegeben, weil dieser nun aufgrund des erfüllten Abfragekriteriums in Schritt 202 ständig durchlaufen werden muß, bevor Schritt 205 erreicht wird. Es ist weiterhin vorgesehen, daß der Schritt 203 einen Subschritt zur Fehlerstatistik entsprechend dem Statistik- und Fehlerauswertungsmodus 213 umfaßt.

Die Frankiermaschine verlangt in der aus US 3 255 439 bekannten Weise eine Verbindung zur Datenzentrale. Kommt die Verbindung zustande, prüft die Datenzentrale die Registerstände. Falls die Nachladung nicht vorgenommen werden kann, hindert die Datenzentrale durch ein zur Frankiermaschine übermitteltes Signal diese am weiteren Betrieb. Wenn die Verbindung kurz nach der von der Frankiermaschine vorgenommenen Signalisierung zustande kam und die Registerstände nicht bemängelt werden, kann die Frankiermaschine ohne eine weitere außerordentliche Inspektion in den Betriebsmodus zurückgeschaltet werden. Hierzu werden neue aktuelle Daten beispielsweise für ein Guthaben und für die erlaubte Stückzahl übermittelt, welche bis zur nächsten Verbindungsaufnahme frankiert werden kann.

Die Datenzentrale kann aufgrund des übermittelten Signalisierungscodes zwischen automatisch vorgenommener und normaler Kommunikation unterscheiden. Erstere wird immer dann erfolgen, wenn der Nutzer der Frankiermaschine die Aufforderungen zur Kommunikation übersehen bzw. ignoriert hat und entsprechende Eingabehandlungen unterläßt. Hierbei kann im Wiederholungsfall bei einem Verdacht einer Manipulation eine Sonderinspektion angeordnet werden.

Es ist vorgesehen, daß die im Schritt 201 aufgerufenen aktuellen Daten unmittelbar nach einer Kommunikation eine berechnete bzw. übermittelte spezifische Stückzahl S' als Stückzahl S und eine maximale Stückzahl $S_{max}$ umfassen. Die Vergleichsstückzahl $S_{ref}$ für ein erstes Stückzahlkriterium entspricht der durch die Zahl k dividierten berechneten bzw. übermittelten maximalen Stückzahl $S_{max}$. Bei Erfüllung des im Schritt 202 abgefragten ersten Stückzahlkriteriums für den zweiten Modus wird auf den folgenden Schritt 203 verzweigt, der eine ständige Warnung für ein bevorstehendes Schlafenlegen der Frankiermaschinenfunktion bzw. eine Aufforderung zur erneuten Kommunikation mit der Datenzentrale umfaßt, bevor Schritt 205 zur Überprüfung der Daten mittels eines weiteren Stückzahlkriteriums erreicht wird. Bei Nichterfüllung des weiteren Stückzahlkriteriums wird ein Schritt 206 zum automatischen Kommunikationsersuchen der Frankiermaschine ausgeführt. Während einer Kommunikation mit der Datenzentrale werden die Transaktionsdaten einzeln und seriell übertragen, die mindestens ein durch einen MAC abgesichertes Entscheidungskriterium umfassen,wodurch das automatische Kommunikationsersuchen aufgehoben wird,falls die Transaktion erfolgreich durchgeführt wurde. Zuvor wurde im Schritt 306 des - in Figur 3a gezeigten - Kommunikationsmodus 300 festgestellt, daß keine weitere Transaktion erforderlich ist und nach Anzeige (Schritt 310) auf den Punkt e zurückverweigt. Wenn also manuell kein weiteres Transaktionersuchen eingegeben wurde, wird vom Schritt 301 zum Betriebsmodus (Punkt f) weiterverzweigt. Somit kann im Schritt 301 zwischen manuell und automatisch gestellten Transaktionersuchen unterschieden werden. Wenn die Kommunikation nach einer vorbestimmten Zeit noch nicht zustande gekommen oder beispielsweise die Datenzentrale belegt, d.h. keine Leitung frei ist, wird dies im Schritt 305 als Kommunikationsfehler gewertet. Dann wird zum Schritt 304 zurückverzweigt und eine Wahlwiederholung bis zu einer vorbestimmten Anzahl vorgenommen. Ist diese vorbestimmte Anzahl erreicht wird vom Schritt 305 über den Anzeigeschritt 310 wieder zum Punkt e zurückverzweigt. Außerdem können im Schritt 305 falls n Wahlwiederholungen erfolglos waren ein eventuell gesetztes Kommunikations-Flag zurückgesetzt werden, so daß im Schritt 301 diesbezüglich kein Transaktionersuchen mehr erkannt wird. Zusätzlich kann gleichzeitig ein Standby-Flag gesetzt werden, was wieder im Schritt 211 erkannt wird. Somit werden in der vorgenannten Weise im Schritt 213 zur Statistik- und Fehlerauswertung anhand einer Checksumme der Inhalt des Programmspeichers (PSP) 11 überprüft Danach wird das Standby-Flag zurückgesetzt und zur Systemroutine 200 Punkt s zurückverzweigt.

Wenn gemäß Figur 4b nach der anderen Variante für den Frankiermodus 400 gearbeitet wird, welche einen Schritt 410 einschließt, dann braucht kein Standby-Flag gesetzt werden. Vom Frankiermodus kann dann direkt auf den Kommunikationsmodus 300 Punkt e zurückverzweigt werden. Damit können weiterhin auch andere Eingaben, beispielsweise gemäß den Schritten Testanforderung 212 oder Registercheck 214 getätigt werden. Nur falls auf den Frankiermodus 400 verzweigt wird, wird dann im Schritt 410 entsprechend dem Entscheidungskriterium erneut festgestellt, ob eine automatische Kommunikation erfoderlich ist. Das ist vorzugsweise der Fall, falls die vorbestimmte Stückzahl verbraucht ist.

War die Kommunikation erfolgreich und wurden Daten übermittelt (im Schritt 211 abgefragt), wird ebenfalls der Schritt 213 erreicht. Im Schritt 213 werden die aktuellen Daten ermittelt bzw. geladen, welche im Schritt 201 aufgerufen und anschließend wieder beim Vergleich im Schritt 202 benötigt werden. Das übermittelte Entscheidungskriterium ist vorzugsweise die neue Stückzahl S'.

Eine alternative Variante besteht darin, daß das Entscheidungskriterium das neue zum Frankieren übermittelte Guthaben ist und im Auswertemodus 213 die neue Stückzahl S' intern in der Frankiermaschine ermittelt wird. Die Kommunikation mit der Datenzentrale umfaßt in diesem Fall nicht mehr die neue Stückzahl S', sondern ist lediglich zur Auslösung der Berechnung im Auswertemodus 213 erforderlich. Die Berechnung erfolgt intern in der Frankiermaschine und gleichzeitig parallel dazu in der Datenzentrale nach den gleichen Methoden aufgrund der übermittelten Registerdaten.

Die Frankiermaschine kann der Datenzentrale Registerwerte vor einer Guthabennachladung übermitteln:

R1 (descending register) vorrätige Restbetrag in der Frankiermaschine,
R2 (ascending register) Verbrauchssummenbetrag in der Frankiermaschine,
R3 (total resetting) die bisherige Gesamtvorgabesumme aller Fernwertvorgaben,
R4 (piece count Σprinting with value ≠ O) Anzahl gültiger Drucke,
R8 (R4 + piece count Σprinting with value =O) Anzahl aller Drucke

daraus folgt:

$$R3 = R2 + R1 \tag{1}$$

Bei jeder Fernwertvorgabe läßt sich R1 abfragen und statistisch auswerten. Wird R1 immer größer, dann kann der gleiche Nachladebetrag in immer größeren Nachladeperioden nachgeladen werden, bzw. die Stückzahl wird kleiner angesetzt, welche bis zur nächsten Kommunikation frankiert werden darf.

Die Stückzahl kann aus der Durchschnittsstückzahl $S_o$, der eine Dispositionsstückzahl $S_x$ hinzuaddiert wird, ermittelt werden. Es gilt:

$$S' = S_o + S_x \tag{2}$$

mit

$$S_o = R_{8alt} \left[ \frac{R_2\,neu}{R_2\,alt} - 1 \right] \tag{3}$$

bzw.

$$S_o = R_{4alt} \left[ \frac{R_2\,neu}{R_2\,alt} - 1 \right] \tag{4}$$

Die abgefragten Registerwerte sind mit dem Index "alt" versehen. Ein dem Ascending-Register entnommener Wert $R_{2alt}$ entspricht dem aktuellen Abfragewert. Entspreeines Vorgabewunsches, der zum aktuellen Abfragewert hinzuaddiert werden muß, ergibt sich der künftige Wert $R_{2neu}$. Die Dispositionsstückzahl $S_x$ ist abhängig von der Einstufung des Frankiermaschinen-Nutzers als A-, B- oder C-Kunde.

In einer weiteren Variante wird die Dispositionsstückzahl $S_x$ in Abhängigkeit von der Einstufung $\alpha_x$ des Frankiermaschinen-Nutzers als A-, B- oder C-Kunde und zusätzlich in Abhängigkeit von seinem Frankierverhalten ermittelt:

$$S_x = \alpha_x * R_{8alt} * R_{1alt}/R_{2alt} \tag{5}$$

bzw.

$$S_x = \alpha_x * R_{4alt} * R_{1alt}/R_{2alt} \tag{6}$$

Von der Datenzentrale wird das Verhalten des Frankiermaschinenbenutzers auf der Basis von während der Kommunikation übermittelten Daten überwacht, um verdächtige Frankiermaschinen festzustellen. Ein entsprechender Suspicious Mode kann nur von der Datenzentrale aktiviert werden, wobei keine direkten Auswirkungen auf die Frankiermaschine stattfinden.

Anhand der frankiermaschinenspezifischen Daten läßt sich ein Frankiermaschinen-Profil erstellen. Dieses Frankiermaschinen-Profil gibt darüber Auskunft, ob ein Kunde mit den durchgeführten Nachladevorgängen in der Lage war, die ermittelte Anzahl an Frankierungen durchzuführen. Es sind innerhalb des Suspicious Mode zwei Stufen zu unterscheiden:

1. Frankiermaschine ist verdächtig und
2. Frankiermaschine muß manipuliert worden sein.

In die Berechnung zur Ermittlung des Frankiermaschinen-Profils können verschiedene frankiermaschinenspezifische Daten einfließen. Im Bereich zwischen einem minimalen Frankierwert $F_{min}$ und einem maximalen Frankierwert $F_{max}$ gestattet die Frankiermaschine gültige Drucke, welche im Register für R4 registriert werden. Außerdem kann eine Nullwertfrankierung erfolgen. Folgende Formeln kommen nachein-

ander zum Einsatz:

$$V_{susp1} = \frac{R4}{(R3 - R1)} * F_{min} = \frac{R4}{R2} * F_{min} \qquad (7)$$

und außerdem, wenn R1alt ≠ R1neu

$$V_{susp2} = \frac{R4neu - R4alt}{R1alt - R1neu} * F_{min} \qquad (8)$$

R1$_{alt}$: R1 nach n-ter Fernwertvorgabe
R1$_{neu}$: R1 vor n+1.-ter Fernwertvorgabe
V$_{susp}$: heuristischer Wert, der Auskunft über den Zustand der Frankiermaschine gibt
F$_{min}$: minimaler Frankierwert

Bei einem Mindestfrankierwert von z.B. $F_{min}$ = 20 Währungseinheiten ergibt sich folgende Fallunterscheidung:

$V_{susp1}$ < 5       in Ordnung (okay)
$V_{susp1}$ = 5.. 100    verdächtig (suspicous)
$V_{susp1}$ > 100      manipuliert (manipulated)

In regelmäßigen Abständen wird in der Datenzentrale eine Plausibilitätskontrolle sämtlicher im Einsatz befindlicher Frankiermaschinen durchgeführt. Bei diesem Verfahren werden die Maschinen gekennzeichnet und der Postbehörde gemeldet, deren Frankierverhalten verdächtig erscheinen oder manipuliert worden sind.

In der Frankiermaschine ist ggf. noch eine andere Sicherheitsmaßnahme (Error Overflow Mode) vorgesehen. Diese kann im zweiten Modus neben oder anstatt der Sleeping-Mode-Variante 1 oder Sleeping-Mode-Variante 2 durchgeführt werden. Bei Erfüllung des Abfragekriteriums im Schritt 202, d.h. bei Überschreitung einer vorbestimmten Anzahl an Fehlern, verlangsamt sich die Reaktionszeitdauer der Frankiermaschine im Schritt 203, wobei über die Anzeige gleichzeitig dieser Zustand an den Bediener der Frankiermaschine gemeldet wird. In den weiteren Schritten kann ähnlich verfahren werden, wie in Zusammenhang mit den Figuren 2 und 5 bereits erläutert wurde. Die Frankiermaschine speichert sowohl interne als auch Bedienungsfehler und Manipulationsversuche in einem Fehlerregister zu protokollarischen Zwecken beispielsweise bis zu der Zahl 999. Wird der Zustand der Überschreitung der Fehleranzahl nicht beseitigt, beispielsweise im Rahmen einer Inspektion durch einen Servicedienst oder durch Rücksetzen während einer Kommunikation mit der Datenzentrale, kann die Reaktionszeitdauer weiter erhöht werden, um eventuelle Manipulationen zu erschweren. Die Fehlerzahl wird dann weiter d.h. wieder bis zu einer vorbestimmten Zahl, beispielsweise im Schritt 213 protokolliert.

In einer ersten Variante ist vorgesehen, die Reaktionszeitdauer, beispielsweise die Zeitdauer bis zum Beginn des Druckbetriebes, linear mit der Anzahl der Fehler zu erhöhen. Die Ausführung des Programmes wird dadurch weder modifiziert noch verhindert, sondern nur verzögert. Insbesondere werden solche unkritischen Programmteile, welche nicht durch Time supervision (Kill Mode 1) oder Flow control überwacht werden, mehrfach aufgerufen, wie beispielsweise die Fehleranzeige. Damit bleibt die Wirkung des Programmes im Wesentlichen unverändert.

In einer zweiten Variante wird die Reaktionszeitdauer jeweils um eine Stufe erhöht, wobei die Stufen Sekunden, Minuten, Stunden, Tage, ... usw. betreffen können.

In Abänderung bzw. in Kombination mit vorgenannten Varianten kann eine Erhöhung der Reaktionszeitdauer außerdem bei jeder Fehlbedienung vorgesehen werden. Hierzu wird in einer Ausführungsform ein elektronisches Zeitschloß betätigt. Vorzugsweise wird eine progressive Steigerung der Reaktionszeitdauer im Betriebsprogramm vorgesehen, um eine Manipulation zu erschweren.

Es ist vorgesehen, daß der Schritt 213 teilweise oder ganz in Verbindung mit anderen Schritten als Subschritt aufgerufen wird. Beispielsweise ist der Statistik und Fehlermodus Bestandteil des Schrittes 203 und der Abrechnungs- und Druckroutine gemäß des Schrittes 406 im Frankiermodus 400, welcher in den Figuren 4a und 4b näher dargestellt ist. Tritt ein schwerer Abrechnungsfehler auf wird die Maschine im Schritt 406 oder im Schritt 208 blockiert. Tritt ein Fehler aber während der Initialisierungsphase im Schritt 101 auf, bleibt die Maschine unter Anzeige eines bestimmten Fehlercodes stehen.

In der Figur 2b ist eine zweite Variante für den Ablaufplan nach der erfindungsgemäßen Lösung dargestellt. Im Schritt 207 wird nicht nur die Strukturprüfung der Registerdaten durchgeführt, sondern der Schritt 207 umfaßt außerdem eine Prüfung der Registerinhalte. Bei Nichtübereinstimmung mit dem Abfragekriterium für einen ordnungsgemäßen Zustand wird im Schritt 208 ein Kill-Mode-Flag zum Sperren der Frankiermaschine gesetzt und dann zum Punkt e verzweigt. Daher können auch bei gesperrter Frankiermaschine alle gewünschten Eingaben, Kommunikationen mit der Datenzentrale, Registeranzeigen bzw. Tests weiterhin durchgeführt werden.

Das Kill-Mode-Flag wird erst im Frankiermodus - in der nach Figur 4b dargestellten Weise - im Schritt 409 vor der eigentlichen Abrechnungs- und Druckroutine (Schritt 406) abgefragt. Ist das Kill-Mode-Flag gesetzt, wird der Statistik- und Fehlerauswertungsmodus (Schritt 213) und der Anzeigemodus (Schritt 215) durchlaufen und dann zur Systemroutine (Punkt s) zurückverzweigt.

Somit bleibt die Frankiermaschine gesperrt. Die Frankiermaschine wird einerseits ohne Freischalten wieder betriebsfähig, wenn der Fehler beseitigt worden ist, d.h. wenn beispielsweise ein Briefstau behoben oder ein Guthaben nachgeladen worden ist.

Andererseits gibt es schwere Fehler, welche erst anläßlich der nächsten Inspektion vor Ort von einer dazu berechtigten Person aufgehoben werden können. Ein solcher Fehler, beispielsweise wenn der Prozessor nicht auf den Arbeitsspeicher zugreifen kann, d.h. den Dateninhalt des RAM's weder lesen noch verändern kann, wird beispielsweise durch Stecken eines speziellen RESET-EPROM's beseitigt. Hierzu muß die Verplombung der Klappe und die Frankiermaschine geöffnet werden. Das RESET-EPROM enthält die erforderlichen Daten, beispielsweise den vorgenannten Y-Code, und spezielle Programme zur Wiederherstellung der Frankiermaschinenfunktion. Beispielsweise kann ein solches Programm eine erfolgte Redundanzverringerung wieder rückgängig machen. Die Protokollierung der Fehler, welche während des Betriebes der Frankiermaschine im Statistik- und Fehlerauswertungsmodus (Schritt 213) getrennt nach Fehlerarten erfolgt, wird dabei von der berechtigten Person daraufhin überprüft, ob ein Manipulationsversuch unternommen worden ist.

Die Erfindung ist nicht auf die vorliegenden Ausführungsformen beschränkt. Vielmehr ist eine Anzahl von Varianten in Rahmen der Ansprüche denkbar.

**Patentansprüche**

1. Verfahren zur Verbesserung der Sicherheit von Frankiermaschinen mit einem Mikroprozessor in einer Steuereinrichtung der Frankiermaschine, mit folgenden Schritten: Ausführung einer Start- und Initialisierungs-routine; nachfolgend Ausführung einer Systemroutine mit einer Möglichkeit, in einen Kommunikationsmodus mit einer entfernten Datenzentrale einzutreten, sowie weiteren Eingabeschritten, um in einen Frankiermodus einzutreten, von dem nach Ausführung einer Abrechnungs- und Druckroutine in die Systemroutine zurückverzweigt wird, **gekennzeichnet durch** folgende Schritte: Bilden einer Checksumme im One Time Programmable-Prozessor über den Inhalt eines externen Programmspeichers PSP (11); Vergleich der Checksumme mit einem im OTP-Prozessor gespeicherten vorbestimmten Wert vor und/oder nach Ablauf des Frankiermodus (400) bzw. Betriebsmodus (290), insbesondere während des Initialisierungs Schritts (101), wenn die Frankiermaschine gestartet wird, oder in Zeiten, in welchen nicht gedruckt wird, in einem Schritt zur Fehlerauswertung (213), wenn die Frankiermaschine im Standby-Modus betrieben wird, Protokollierung im Fehlerfall, und anschließende Blockierung der Frankiermaschine.

2. Verfahren nach Anspruch 1, **dadurch gekennzeichnet**, daß zur Verbesserung der Manipulationssicherheit in einem als Kill-Mode 2 bezeicheten Schritt Zusätzlich zur Checksumme über den Inhalt des Programmspeichers (PSP 11) die Checksumme der Registerstände gebildet wird und/oder eine Anfrage hinsichtlich Manipulationsversuche im Standby Modus vorgesehen ist.

3. Verfahren nach Anspruch 1, **dadurch gekennzeichnet**, daß der Frankiermodus (400) einen Schritt (405) zur Abfrage einer Druckausgabeanforderung und einer weiteren Abfrage nach der Anzahl an Durchläufen durch die Programmschleife umfaßt, welche letztendlich wieder auf die Eingaberoutine (401) des Frankiermodus (400) direkt (Punkt d) oder indirekt (Punkt e) über den Schritt (301) des Kommunikationsmodus (300) auf den Betriebsmodus (290) einschließlich Frankiermodus (400) führt, daß bei Erfüllung eines Abfragekriteriums, wobei eine vorbestimmte Zeit keine Eingabeanforderung vorliegt oder durch einen Briefsensor kein nachfolgendes zu frankierendes Poststück ermittelt wird und somit keine Druckanforderung erfolgt, ein Flag gesetzt und direkt auf einen Punkt s zur Systemroutine (200) zurückverzweigt wird, ohne daß die Abrechnungs- und Druckroutine im Schritt (406) durchlaufen wird, daß im Betriebsmodus (290) eine Abfrage erfolgt, ob das Flag gesetzt ist, und bei Vorliegen des Abfragekriteriums (211) der Standby Modus erreicht ist, daß im Statistik- und Fehlerauswertungsmodus (213) die Checksumme über den Inhalt des Programmspeichers (PSP 11) gebildet und daß nach der Checksummenprüfung das im Abfrageschritt (211) abgefragte Flag zurückgesetzt oder im Fehlerfall eine Maßnahme ergriffen wird, die direkt zum Blockieren der Frankiermaschine führt oder daß die Maßnahme indirekt bei einem Registercheck (207) erkannt wird, um dann auf einen Sperrschritt (208) zu verzweigen, um die Frankiermaschine zu sperren.

4. Verfahren nach Anspruch 3, **dadurch gekennzeichnet**, daß im Schritt zur Fehlerauswertung (213) ein Codeword Y gelöscht wird, wenn ein Manipulationsversuch im Standby Modus durch Checksummenprüfung festgestellt worden ist.

**Claims**

1. A method for improving the safety of franking machines by means of a microprocessor in a control means of the franking machine involving the following steps: execution of a start and initialization routine, followed by the execution of a system routine with a possibility to enter into a communication mode with a remote data central, as well as further input steps, in order to enter into a franking mode from which, after the execution of an accounting and printing routine, control is branched back to the system routine,

**characterized by** the following steps:

formation of a checksum of the content of an external program memory PSP (11) by the on-time programmable processor; comparison of the checksum with a predetermined value stored in the OTP processor before and/or after execution of the franking mode (400) or the operating mode (290), in particular during the initialization step (101), upon starting the franking machine, or in times when no printing takes place, in an error analyzing step (213), when the franking machine is operated in standby mode; logging in case of an error; followed by a blocking of the franking machine.

**2.** A method according to Claim 1, **characterized in** that, for improving the manipulation safety, in an additional step (30) named kill mode 2, the checksum of the register contents is formed in addition to the checksum of the content of the program memory (PSP 11) and/or a query as to manipulation attempts is provided in the standby mode.

**3.** A method according to Claim 1, **characterized in** that the franking mode (400) includes a step (405) for querying a printout request and further querying as to the number of runs of the program loop that finally leads back directly (point d) to the input routine (401) of the franking module (400) or indirectly (point e) over step (301) of the communication mode (300) to the operating mode (290) including the franking mode (400); that, upon fulfilling a query criterion, i.e. for a predetermined time, no input request is made or a letter sensor does not detect any subsequent mail item to be franked and thus no printing request is made, a flag is set and control is directly branched back to a point s to the system routine (200), without passing the accounting and printing routine in step (406); that, in operating mode (290), it is queried whether the flag is set and, upon existence of the query criterion (211), standby mode is entered; that, in the statistics and error analysis mode (213), the checksum of the content of the program memory (PSP 11) is formed; and that, following the checksum verification, the flag queried in query step (211) is reset or, in case of an error, a measure is taken directly leading to blocking the franking machine; or that the measure is indirectly recognized in a register check (207) in order to branch to a locking step (208) for locking the franking machine.

**4.** A method according to Claim 3, **characterized in** that, in the error analysis step (213), a code word Y is deleted when a manipulation attempt has been detected in standby mode by means of checksum verification.

## Revendications

**1.** Procédé destiné à améliorer la sécurité des machines à affranchir comprenant un microprocesseur dans un dispositif de commande de la machine à affranchir, comportant les étapes suivantes: réalisation d'une routine de démarrage et d'initialisation; puis réalisation d'une routine de système avec une possibilité de pénétrer dans un mode de communication avec une centrale de données éloignée, ainsi que d'autres étapes d'entrée pour pénétrer dans un mode d'affranchissement duquel, après réalisation d'une routine de décompte et d'impression, on est rebifurqué dans la routine de système, **caractérisé par** les étapes suivantes: formation d'une somme de contrôle dans le processeur à programmation unique (OTP) via le contenu d'une mémoire de programme externe PSP (11); comparaison de la somme de contrôle avec une valeur prédéfinie mémorisée dans le processeur OTP avant et/ou après déroulement du mode d'affranchissement (400) respectivement du mode de service (290); en particulier pendant l'étape d'initialisation (101) lorsque la machine à affranchir est démarrée, ou dans les périodes où l'on n'imprime pas, dans une étape destinée à l'analyse d'erreur (213) lorsque la machine à affranchir est exploitée en mode standby, verbalisation en cas d'erreur, et puis blocage de la machine à affranchir.

**2.** Procédé selon la revendication 1, **caractérisé en ce que,** pour l'amélioration de la sécurité de manipulation dans une étape (30) désignée comme mode kill 2, en plus de la somme de contrôle, la somme de contrôle des états de registre est formée via le contenu de la mémoire de programme (PSP 11) et/ou une demande concernant les essais de manipulation est prévue en mode standby.

**3.** Procédé selon la revendication 1, **caractérisé en ce que** le mode d'affranchissement (400) comprend une étape (405) pour la demande d'édition d'impression et pour une autre demande du nombre de passages à travers la boucle du programme, laquelle finalement reconduit à la routine d'entrée (401) du mode d'affranchissement (400) directement (point d) ou indirectement (point e) via l'étape (301) du mode de communication (300) sur le mode de service (290) y compris le mode d'affranchissement (400), en ce que lors d'une réponse à un critère de demande, une demande d'entrée n'existant pas pendant une période prédéterminée ou, via un capteur de lettre, aucun pli à affranchir n'étant repéré et ainsi aucune demande d'impression n'ayant lieu, on place un drapeau et rebifurque directement sur un point s vers la routine de système (200) sans passer par la routine de décompte et d'impression dans l'étape (406), en ce que, dans le mode de service (290), il y a une demande pour savoir si le drapeau est placé et si, en cas d'existence du critère de demande (211), le mode standby est atteint, en ce que, dans le mode statistique et d'analyse d'erreur (213), la somme de contrôle est formée via le contenu de la mémoire du programme (PSP 11) et en ce que, après l'examen de la somme de contrôle, le drapeau demandé dans l'étape de demande (211) est désactivé ou, en cas d'erreur, on prend une mesure qui conduit directement au blocage de la machine à affranchir ou en ce que la mesure est indirectement reconnue lors d'un contrôle de registre (207) pour, ensuite, bifurquer sur une étape de blocage (208) afin de bloquer la machine à affranchir.

4. Procédé selon la revendication 3, **caractérisé en ce que,** dans l'étape pour l'analyse d'erreur (213), on efface un mot de code Y lorsqu'un essai de manipulation a été constaté en mode standby par un examen de somme de contrôle.

**Fig. 1a**

**Fig. 1c**

| 21 SEN-SOR | 20 |
|---|---|

| 5 NVM | $B_1$ | C | G |
|---|---|---|---|
| | $B_2$ | D | |
| | $B_3$ | E | |
| | $B_4$ | F | |

8 UHR/ DATUM

6

9 CSP

μP

10 KSP

22 WAAGE

DC

11 PSP

23 MODEM

4 I/O

3 DIS-PLAY

2 KEY-BOARD

12 MOTOR

RAM

7a

13 ENCO-DER

7b

14 DS

1 PRINT-HEAD

PIXEL SP. 7c

15 DR

**Fig. 1b**

/102

n  Y'in E existiert ?  j

/103

Y := Y'

104

/105

Y := Y

E := 0

s

**Fig. 7**

Start /100

Sensor! /21

Startroutine, Initialisierung /101

Löschen des alten Code Y /210

setze Y'auf die Adresse von Y /102-105

→ ◆s (Systemroutine 200)

Aufruf aktueller Daten /201

/203-206

n ┌ Kriterium erfüllt ? ┐ j
202                              Anzeige/Warnung Sleeping-Modus

◆t

207 j Gültiger Code Y ? Registercheck OK ? n Kill-Modus Sperren der FM /208

◆e

301 Anzeige 310

Kommunikationsersuchen ? (Kommunikations-)
n                                    j (modus 300          )

Kommunikations-bzw.Öffnungsersuchen Ja! Ein-leiten einer Kommunikation mit Datenzentrale. Transaktionen durchführen. Guthaben-u.a.Daten nachladen. Neuen Code Y'laden.

◆f

(Betriebsmodus 290) n Daten übermittelt ? j

212 \                              n
j Testanforderung ?              \211

214 \

n Registercheck ? j Statistik- und Fehler-auswertungsmodus /213

216 \ ◆d /400

Testmodus    Frankiermodus    Anzeigemodus /215

Fig. 2a

Start /100

Sensor! /21

Startroutine, Initialisierung /101

Löschen des
alten Code Y /210

setze Y'auf die Adresse von Y /102-105

◆s (Systemroutine 200)

Aufruf aktueller
Daten /201

/203-206

n
202 ┌◄─ Kriterium erfüllt ? ─►┐
j
Anzeige/Warnung
Sleeping-Modus ─►

◆t

207 \
j ─ Gültiger Code Y ?
Registercheck OK ?
n
Kill-Mode-Flag
Sperren der FM ─► /208

◆e

Anzeige ◄─
301— 310

Kommunikationsersuchen ? ─►┐ (Kommunikations-)
n j (modus 300 )

Kommunikations-bzw.Öffnungsersuchen Ja! Ein-
leiten einer Kommunikation mit Datenzentrale.
Transaktionen durchführen. Guthaben-u.a.Daten
nachladen. Neuen Code Y'laden.

◆f

(Betriebs-) n j
(modus 290) 212 ─ Daten übermittelt ? ─►
\ \211

j n
─ Testanforderung ? ─►

214 \
n j
─ Registeranzeige? ─►

Statistik- u.Fehler
auswertungsmodus /213

216 \ c◆ ─►─ ◆d /400

Testmodus ─ Frankiermodus ─ Anzeigemodus /215

**Fig. 2b**

**Fig. 3a**

**Fig. 3b**

♦s                    d♦

401— | Eingaberoutine |

402— | Anzeigeroutine |

403— | Druckdatenaufbereitung |

404— n | Eingabeanforderung ? | j

405— j | Druckausgabeanforderung ? | n

406— | Abrechnungs- und Druckroutine |

\400

**Fig. 4a**

♦s (Systemroutine 200)

| Aufruf aktueller Daten $S$, $S_{ref}$ | /201

/203

202— n | $S < S_{ref}$ ? | j | Anzeige/Warnung "TELESET" Verzögerung $t_n$ |

| $t_n := t_n + t_k$ $S_{ref} := S_{ref} - n$ | 204

♦t

**Fig. 5**

◆s                    e◆

400
/

d◆                    ◆c

401- Eingaberoutine

402- Anzeigeroutine

403- Druckdatenaufbereitung

Durchlaufzähler
inkrementieren

\
407

n          j
404- Eingabeanforderung ?

408 \

j                              n 405
Stand-  Durchlaufanzahl > G ?    /
by-
FLAG    Druckausgabeanforderung ?    n
j

213
/

n                              j
409- Kill-Mode-Flag gesetzt ?

Statistik-
und Fehlerauswertung

j              n
410 -   S > 0 ?
◆e

406- Abrechnungs- und
Druckroutine

Anzeigemodus

215 /

**Fig. 4b**

30

♦s (Systemroutine 200)

Aufruf aktueller
Daten S, S_max /201

S < S_max/k ? 202 — n / j → Anzeige/Warnung /203
"CALL FP"

$S_{max} := \dfrac{S_{max}}{m}$ /204

205 S > 0 ? — j / n

Flag setzen /206

♦t

207 Gültiger Code Y ? — n → Kill-Modus /208
j Registercheck OK ? Sperren der FM

♦e Anzeige 310

301 Kommunikationsersuchen ? (Kommunikations-)
n / j (modus 300 )

Kommunikations-bzw.Öffnungsersuchen Ja! Ein-
leiten einer Kommunikation mit Datenzentrale.
Transaktionen durchführen. Guthaben-u.a.Daten
nachladen. Neuen Code Y'laden.

♦f

(Betriebsmodus 290) n Daten übermittelt ? j
212 n \211

Testanforderung ?
j / n

214 St.+F-Auswertungsmodus /213
Registercheck ? reset Stückzähler
n / j

216 ♦d /400 215
Testmodus Frankiermodus Anzeigemodus /215

Fig. 6